# EUROPEAN PATENT SPECIFICATION

(11) **EP 3 808 953 B1**
(45) Date of publication and mention of the grant of the patent: **15.02.2023**
(21) Application number: 19833871.7
(22) Date of filing: 11.07.2019
(51) Int. Cl.: F02B 23/08, F02D 9/02, F02D 9/08, F02D 9/10, F02F 1/42, F02B 31/04, F02M 35/10, F02B 23/10

(54) **SPARK-IGNITION TYPE TWO-VALVE ENGINE, ENGINE UNIT, AND VEHICLE**
FREMDGEZÜNDETE ZWEIVENTILBRENNKRAFTMASCHINE, MOTOREINHEIT UND FAHRZEUG
MOTEUR À DEUX SOUPAPES DE TYPE À ALLUMAGE PAR ÉTINCELLE, UNITÉ DE MOTEUR ET VÉHICULE

(30) Priority: 12.07.2018 JP 2018132366
(43) Date of publication of application: 21.04.2021
(73) Proprietor: Yamaha Hatsudoki Kabushiki Kaisha, Iwata-shi, Shizuoka 438-8501 (JP)
(72) Inventor: NAGAI, Yoshitaka, Iwata-shi, Shizuoka 438-8501 (JP); TANOKURA, Hayato, Iwata-shi, Shizuoka 438-8501 (JP)
(74) Representative: Stöckeler, Ferdinand
(86) International application number: PCT/JP2019/027556
(87) International publication number: WO 2020/013289

(56) References cited:
- JP-A- 2004 316 609
- JP-A- 2004 316 609
- JP-A- 2014 070 569
- JP-A- 2016 186 295
- JP-A- 2016 186 295
- JP-B2- 5 894 520
- US-A1- 2011 265 745
- Anonymous: "[New car] The price is finally announced! "V-Strom 250" will be released on 7/6 at the 570,000 yen level", news.webike, 30 June 2017 (2017-06-30), pages 1-14, XP055765436, Retrieved from the Internet: URL:https://news.webike.net/2017/06/30/103 936 [retrieved on 2021-01-15]
- Anonymous: "[New car] The price is finally announced! "V-Strom 250" will be released on 7/6 at the 570,000 yen level", news.webike , 30 June 2017 (2017-06-30), pages 1-14, XP055765436, Retrieved from the Internet: URL:https://news.webike.net/2017/06/30/103 936 [retrieved on 2019-09-19]

## Description

### Technical Field

The present teaching relates to a spark-ignition type two-valve engine, an engine unit, and a vehicle.

### Background Art

Known is a spark-ignition type two-valve engine provided with one intake valve and one exhaust valve, and having an ignition plug that applies spark ignition for combustion.

For example, Patent Literature 1 (PTL 1) shows a spark-ignition type internal combustion engine with four strokes and two valves. The spark-ignition type internal combustion engine of PTL 1 includes a cylinder, a cylinder head, a pair of intake and exhaust valves, and an ignition plug. The cylinder head of the spark-ignition type internal combustion engine has a squish surface, which faces a peripheral portion of a piston crown surface. At the squish surface, a squish flow is produced. In the spark-ignition type internal combustion engine of PTL 1, the squish flow is used to increase the flame propagation speed in a combustion chamber.

For example, Patent Literature 2 (PTL 2) shows an internal combustion engine provided with one intake valve, one exhaust valve, and an ignition plug. In the internal combustion engine of PTL 2, the shapes of the valves and an intake port are contrived to produce a tumble flow in a combustion chamber. This is how to improve a thermal efficiency.

For example, Patent Literature 3 (PTL 3) shows a two-valve internal combustion engine having an ignition plug. The two-valve internal combustion engine of PTL 3 has a piston whose top surface has a squish surface formed along an outer periphery of the top surface. Thanks to a squish area located between the squish surface and a cylinder head, a squish flow is produced. In addition, a recessed portion for holding a tumble flow is disposed in a portion that is more proximal than the squish surface. In the two-valve internal combustion engine of PTL 3, the tumble flow and the squish flow are used to improve a thermal efficiency.

### Citation List

### Patent Literature

PTL 1: Japanese Patent Application Laid-Open No. 2003-301722
PTL 2: Japanese Patent Application Laid-Open No. 2012-241531
PTL 3: Japanese Patent Application Laid-Open No. 2015-63926

Further engines are known from JP 2014 070569 A, JP 5 894520 B2, JP 2016 186295 A, JP 2004 316609 A and US 2011/265745 A1.

### Summary of Invention

### Technical Problem

For spark-ignition type two-valve engines, as described above, an attempt to increase the combustion speed by using a squish flow or by using a tumble flow is made for the purpose of improving the thermal efficiency. An attempt to increase the combustion speed by additionally imparting a squish flow to a tumble flow as proposed in PTL 3, for example, is also made.

For spark-ignition type two-valve engines, further improvement in the thermal efficiency is desired.

The present teaching aims to provide a spark-ignition type two-valve engine that can improve the thermal efficiency.

### Solution to Problem

Conventionally, research and development of spark-ignition type two-valve engines are made focusing on the combustion speed for the purpose of improving the thermal efficiency, and are made based on a technical idea of using a squish flow to increase the combustion speed, for example.

The present inventors, in the course of research and development, found it difficult that further improvement in the thermal efficiency of a spark-ignition type two-valve engine is approached with focus only on the combustion speed. One conceivable cause of the difficulty in improving the thermal efficiency with focus only on the combustion speed would be a thermal loss in the spark-ignition type two-valve engine. For example, further increasing the combustion speed of an engine like the ones shown in PTL 1 to PTL 3 involves a rapid temperature rise in a local part of the engine because of combustion. Of energy produced by this combustion, energy that is to be converted to push the piston down is apt to decrease while heat energy that is to dissipate through the cylinder or the like is apt to increase.

The present inventors focused on a distance over which flame propagates upon combustion in a spark-ignition type two-valve engine. The present inventors studied the size and shape of a spark-ignition type two-valve engine from the viewpoint of the distance over which combustion flame propagates. In the course of studying the distance over which combustion flame propagates, the present inventors considered setting a longer piston stroke.

It is conventionally considered that setting a long piston stroke in a normal engine design leads to a lowered thermal efficiency because of an increased mechanical loss caused by piston movement. It is also considered that setting a long piston stroke involves a decrease in the cylinder bore diameter, which may reduce a region where a squish region can be disposed, consequently reducing the combustion speed so that the thermal efficiency is lowered.

The present inventors studied a piston stroke of a spark-ignition type two-valve engine, and discovered the following.

As a result of further studying a piston stroke of a spark-ignition type two-valve engine, the present inventors found out the following.

If a single center tumble port (SCTP), which feeds gas to a combustion chamber, has a separation enhancing part for separating gas from a wall surface, a fast tumble flow can be produced by gas being fed to the combustion chamber. Setting a long piston stroke leads to an increase in the piston movement speed. As the piston movement speed at a time of gas intake increases, the speed of a tumble flow caused by intake gas increases.

A spark-ignition type two-valve engine is provided with one intake valve and one gas inlet. The one intake valve and the one gas inlet can be disposed such that an extending area covers a gas outlet, the extending area being defined as an area that has a width equal to that of the gas inlet and that extends from the gas inlet toward a gas intake direction. With such a configuration, a flow that is produced by intake gas introduced into the combustion chamber through the gas inlet is fastest at a location near a straight line that extends from the center of the one gas inlet to the center of the one gas outlet, when viewed in a piston reciprocation direction. That is, in a central portion of the flow, a fast tumble flow is produced, as compared to a configuration having two intake vents arranged side by side, for example. The central portion of the flow, which forms a main part of the tumble flow, moves the longest distance in the combustion chamber. Since the tumble flow has a speed distribution in which the central portion of the flow is fast, a disturbance of the tumble flow can be suppressed even when the speed of the entire flow increases.

Thus, in the spark-ignition type two-valve engine provided with one intake valve, fast piston movement in an intake stroke produces a fast tumble flow having a suppressed disturbance.

Moreover, setting a long piston stroke in the spark-ignition type two-valve engine provides an increased piston movement speed at a time when the piston pushes back the intake gas in a compression stroke. Consequently, a fast tumble flow is obtained.

In the spark-ignition type two-valve engine, therefore, setting a long piston stroke provides a fast tumble flow, thus reducing a time required for gas combustion. In the spark-ignition type two-valve engine, even if a region where a squish region can be disposed is reduced because of, for example, a decrease in the cylinder bore diameter, an influence of the reduction in the squish region can be diminished by the fast tumble flow described above.

In the spark-ignition type two-valve engine, setting a long piston stroke involves a decrease in the cylinder bore diameter. Thus, the shape of the combustion chamber defined by the piston has a reduced flatness. Accordingly, a maximum distance over which flame propagates, that is, a distance in a cylinder bore diameter direction in the combustion chamber, is short. This can suppress an increase of heat energy that dissipates through the cylinder or the like before completion of combustion. Consequently, the spark-ignition type two-valve engine obtains an increased thermal efficiency.

Based on the studies above, the present inventors supposed that an increase in the thermal efficiency caused by setting a long piston stroke in the spark-ignition type two-valve engine can be possibly greater than the amount of increase in the mechanical loss.

The present inventors decreased the cylinder bore diameter while increasing the piston stroke in the spark-ignition type two-valve engine. This resulted in a discovery that the thermal efficiency can be improved.

The spark-ignition type two-valve engine according to the present teaching accomplished based on the findings above has the following configurations.
(1) A spark-ignition type two-valve engine including:
   a piston part configured to reciprocate, the piston part defining a combustion chamber;
   a crankshaft coupled to the piston part so as to be rotated in accordance with reciprocation of the piston part;
   one exhaust port communicating with the combustion chamber via a gas outlet;
   one single center tumble port communicating with the combustion chamber via a gas inlet, the one single center tumble port having a separation enhancing part that causes gas being flown to the gas inlet to flow separate away from a wall surface continuous with the gas inlet such that a tumble flow tumbling about an axis that extends in a direction intersecting the reciprocation direction is imparted to gas taken into the combustion chamber through the gas inlet, the gas inlet being provided such that an extending area covers the gas outlet when viewed in the reciprocation direction of the piston part, the extending area being defined as an area that has a width equal to that of the gas inlet and that extends from the gas inlet toward a gas intake direction;
   one exhaust valve that opens and closes the gas outlet;
   one intake valve that opens and closes the gas inlet;
   an offset ignition plug including an offset ignition part configured to apply spark ignition to gas in the combustion chamber, the offset ignition part being disposed in a first region out of two regions defined by a center passing line dividing the combustion chamber into two such that the offset ignition part avoids overlapping the center passing line, the center passing line passing through the center of the gas outlet and the center of the gas inlet when viewed in the reciprocation direction; and
   a small-diameter long-stroke cylinder provided with the one exhaust port and the single center tumble port, the small-diameter long-stroke cylinder having a stroke volume of 0.1 L or more and less than 0.2 L, the small-diameter long-stroke cylinder cooperating with the piston part to define the combustion chamber, the small-diameter long-stroke cylinder being formed in such a manner that: the combustion chamber has a diameter shorter than a reciprocation stroke length of the piston part when viewed in the reciprocation direction; and as the piston part moves toward a bottom dead center by a stroke length longer than the diameter of the combustion chamber when viewed in the reciprocation direction, the tumble flow is imparted to gas taken from the single center tumble port through the separation enhancing part, while as the piston part moves toward a top dead center by a stroke length longer than the diameter, the gas pushed by the piston part flows toward the gas inlet.

The spark-ignition type two-valve engine of (1) includes the piston part, the crankshaft, the offset ignition plug, and the small-diameter long-stroke cylinder.

The piston part reciprocates. The crankshaft is coupled to the piston part so as to be rotated in accordance with reciprocation of the piston part. The small-diameter long-stroke cylinder cooperates with the piston part to define the combustion chamber. The small-diameter long-stroke cylinder has a stroke volume of 0.1 L or more and less than 0.2 L. The small-diameter long-stroke cylinder has the one exhaust port and the one single center tumble port (SCTP). The exhaust port communicates with the combustion chamber via the gas outlet.

The single center tumble port (SCTP) communicates with the combustion chamber via the gas inlet. The single center tumble port (SCTP) has the separation enhancing part. The separation enhancing part is configured to enhance separation of gas from the wall surface continuous with the gas inlet. The separation enhancing part enhances separation of gas from the wall surface to make a tumble flow imparted to gas taken into the combustion chamber. The gas inlet is arranged such that the extending area of the gas inlet covers the gas outlet. The extending area is defined as an area that has a width equal to that of the gas inlet and that extends from the gas inlet toward the gas intake direction when viewed in the reciprocation direction of the piston part. The offset ignition part is positioned in the first region out of the two regions defined by the center passing line dividing the combustion chamber into two such that the offset ignition part avoids overlapping the center passing line.

The combustion chamber has a diameter shorter than the reciprocation stroke length of the piston part when viewed in the reciprocation direction. As the piston part moves toward the bottom dead center, a tumble flow is produced in the combustion chamber by gas taken from the single center tumble port (SCTP). The piston part moves by a stroke length longer than the diameter of the combustion chamber. In the combustion chamber, as the piston part moves toward the top dead center, gas pushed by the piston flows toward the gas inlet. At this time as well, the piston part moves by a stroke length longer than the diameter of the combustion chamber. The offset ignition part applies spark ignition to gas in the combustion chamber.

According to the configuration of (1), in the combustion chamber, gas passes through the single center tumble port (SCTP) as the piston part moves toward the bottom dead center. The gas is separated from the wall surface continuous with the gas inlet by the separation enhancing part. The separation enhancing part separates the gas from the wall surface such that a tumble flow is produced in the small-diameter long-stroke cylinder. In the small-diameter long-stroke cylinder, therefore, a fast tumble flow is produced by the gas taken into the single center tumble port (SCTP). Since the piston part moves by a stroke length longer than the diameter of the combustion chamber, the movement speed of the piston part is high. This causes a fast tumble flow to be produced in the combustion chamber.

Since the offset ignition part is positioned in the first region of the combustion chamber so as to avoid overlapping the center passing line, a space where the offset ignition part is arranged is less influential, which makes it possible to make the gas inlet of the single center tumble port (SCTP) large. Here, the gas inlet of the single center tumble port (SCTP) has an area smaller than the sum total of respective areas of two or more intake vents of an engine including the two or more intake vents for example. The smaller an opening is, the higher the flow velocity of gas passing therethrough is. Thus, gas passing through the gas inlet of the single center tumble port (SCTP) produces a fast tumble flow in the combustion chamber.

The gas inlet of the single center tumble port (SCTP) is arranged such that the extending area of the gas inlet covers the gas outlet when viewed in the reciprocation direction of the piston part. Accordingly, a flow of gas taken into the combustion chamber from the single center tumble port (SCTP) contains a component having a high flow velocity at a location near the center line of the combustion chamber, when viewed in the reciprocation direction. As a result, a tumble flow formed in the combustion chamber has a distribution in which a central portion of the flow is fast. This can suppress disturbance even when the speed of the entire flow increases. It therefore is easy to maintain a fast tumble flow throughout the combustion chamber. Gas taken into the small-diameter long-stroke cylinder through the gas inlet firstly flows toward the piston. Since the gas flow is fast, the gas taken into the combustion chamber reaches the vicinity of the piston before the piston part changes its moving direction at the bottom dead center. Thus, when the piston part changes its moving direction to move toward the top dead center, the gas having reached the vicinity of the piston is pushed back and reversed by the piston part. In the combustion chamber, the gas pushed by the piston part flows toward the gas inlet, so that the tumble flow is reinforced or maintained. The stroke by which the piston part moves is longer than the diameter of the combustion chamber, and therefore the movement speed of the piston part is high. The gas being pushed back by the piston part having the high movement speed makes it easy to maintain a fast tumble flow.

In addition, the combustion chamber has a diameter shorter than the reciprocation stroke length of the piston part when viewed in the reciprocation direction. Thus, the combustion chamber defined by the piston part is shaped to have a reduced flatness. This makes a tumble flow likely to be maintained, and shortens a distance over which flame propagates along a direction in which a top surface of the piston part extends at a time of flame propagation after ignition. As a result, a combustion time is shortened. Accordingly, heat energy that dissipates through the cylinder or the like before completion of the combustion can be suppressed.

The offset ignition part is arranged at a position offset from the center of the combustion chamber, when viewed in the reciprocation direction. Nevertheless, the offsetting of the offset ignition part is less influential to the combustion time, because of the fast tumble flow and the shortened maximum distance of flame propagation. Accordingly, the thermal efficiency of the spark-ignition type two-valve engine increases.

In the combustion chamber, as described above, the fast tumble flow is maintained, while the distance of flame propagation is reduced. Thus, a time required for gas combustion is shortened. The shortening of the time required for combustion can improve the thermal efficiency of the spark-ignition type two-valve engine.

In an ordinary engine, the indicated thermal efficiency tends to be lowered as the engine size decreases, due to the relationship between the volume and surface area. In a case where the stroke volume is less than 0.2 L, lowering of the indicated thermal efficiency along with a reduction in the stroke volume is accelerated. In the configuration of (1), a fast tumble flow is produced by the gas taken into the small-diameter long-stroke cylinder from the single center tumble port (SCTP) having the separation enhancing part, and therefore the thermal efficiency of the spark-ignition type two-valve engine increases. The increase in the thermal efficiency can compensate for lowering of the indicated thermal efficiency that would be caused if an ordinary engine is downsized to have a stroke volume of down to 0.1 L. Accordingly, the configuration of (1) can improve the thermal efficiency of the spark-ignition type two-valve engine that is provided with the single center tumble port (SCTP) having the separation enhancing part and the small-diameter long-stroke cylinder and that has a stroke volume of 0.1 L or more and less than 0.2 L.

In an aspect of the present teaching, the spark-ignition type two-valve engine can adopt the following configuration.

(2) The spark-ignition type two-valve engine of (1), wherein
the small-diameter long-stroke cylinder has a stroke volume of 0.1 L or more and less than 0.18 L.

The spark-ignition type two-valve engine of (2), which has a simple structure provided with the single center tumble port functioning as one intake valve and one exhaust valve, can suppress upsizing of a small-sized engine having a stroke volume of less than 0.18 L, while improving its thermal efficiency.

In an aspect of the present teaching, the spark-ignition type two-valve engine can adopt the following configuration.

(3) The spark-ignition type two-valve engine of (1) or (2), wherein
the piston part has a reciprocation stroke length longer than 1.2 times the diameter of the combustion chamber.

In the spark-ignition type two-valve engine of (3), the reciprocation stroke length of the piston part is longer than 1.2 times the diameter of the combustion chamber, and therefore the movement speed of the piston part is high. This causes a fast tumble flow to be produced in the combustion chamber. In addition, the combustion chamber is shaped to have a reduced flatness when the piston part is at the top dead center. This makes a tumble flow likely to be maintained, and shortens a distance over which flame propagates along a direction in which the top surface of the piston part extends at a time of flame propagation after ignition. As a result, a combustion time is shortened. In a region where the reciprocation stroke length of the piston part is longer than 1.2 times the diameter of the combustion chamber, the effect of increasing the indicated thermal efficiency consequent upon an increase in the movement speed of the piston part can be obtained stably. When the reciprocation stroke length of the piston part is longer than 1.2 times the diameter of the combustion chamber, the degree of increase in the indicated thermal efficiency relative to an increase in the stroke is saturated. In other words, the increase in the indicated thermal efficiency is stabilized relative to the increase in the stroke.

In an aspect of the present teaching, an engine unit can adopt the following configuration.

(4) An engine unit including:
the spark-ignition type two-valve engine according to any one of (1) to (3);
an intake passage communicating with the single center tumble port, the intake passage being configured to supply gas to the single center tumble port; and
a throttle body including a throttle valve that regulates a flow rate of gas flowing through the intake passage,
the throttle body being positioned so as to overlap the small-diameter long-stroke cylinder in a direction perpendicular to a reciprocation direction of the piston part such that an angle formed between the reciprocation direction of the piston part and a center line of the intake passage in the throttle body is smaller than an angle formed between a plane perpendicular to the reciprocation direction of the piston part and the center line.

The combustion chamber of the spark-ignition type two-valve engine included in the engine unit of (4) has a diameter shorter than the reciprocation stroke length of the piston part when viewed in the reciprocation direction. Thus, the small-diameter long-stroke cylinder, which defines the combustion chamber, is less likely to be upsized in the diameter direction. This provides a high degree of freedom in arrangement of the throttle body, which is positioned so as to overlap the small-diameter long-stroke cylinder. Accordingly, it is possible to avoid an arrangement of the intake passage that hinders production of a fast tumble flow, in a case where the throttle body is arranged such that the angle formed between the reciprocation direction of the piston part and the center line of the intake passage is smaller than the angle formed between a plane perpendicular to the reciprocation direction of the piston part and the center line. Consequently, the thermal efficiency can be more improved.

In an aspect of the present teaching, an engine unit can adopt the following configuration.

(5) An engine unit including:
the spark-ignition type two-valve engine according to any one of (1) to (3);
an intake passage communicating with the single center tumble port, the intake passage being configured to supply gas to the single center tumble port; and
a throttle body including a throttle valve that regulates a flow rate of gas flowing through the intake passage,
the throttle body being arranged such that a center line of the piston part extending in a reciprocation direction of the piston part intersects a center line of the intake passage in the throttle body.

The combustion chamber of the spark-ignition type two-valve engine included in the engine unit of (5) has a diameter shorter than the reciprocation stroke length of the piston part when viewed in the reciprocation direction. Thus, the small-diameter long-stroke cylinder, which defines the combustion chamber, is less likely to be upsized in the diameter direction. This provides a high degree of freedom in arrangement of the throttle body. Accordingly, it is possible to avoid an arrangement of the intake passage that hinders production of a fast tumble flow, in a case where the throttle body is arranged such that the center line of the piston part intersects the center line of the intake passage. Consequently, the thermal efficiency can be more improved.

In an aspect of the present teaching, an engine unit can adopt the following configuration.

(6) An engine unit including:
the spark-ignition type two-valve engine according to any one of (1) to (3); and
a catalyst unit arranged so as to at least partially overlap the small-diameter long-stroke cylinder when viewed in a diameter direction of the small-diameter long-stroke cylinder, the catalyst unit accommodating a catalyst that purifies exhaust gas discharged from the combustion chamber of the spark-ignition type two-valve engine.

The combustion chamber of the spark-ignition type two-valve engine included in the engine unit of (6) has a diameter shorter than the reciprocation stroke length of the piston part when viewed in the reciprocation direction. It is therefore possible to arrange the catalyst unit such that the catalyst unit overlaps the small-diameter long-stroke cylinder in the diameter direction of the small-diameter long-stroke cylinder, while suppressing upsizing of the small-diameter long-stroke cylinder in the diameter direction. Such an arrangement enables the distance between the combustion chamber and the catalyst to be shortened so that exhaust gas with a higher temperature is supplied to a catalyst in order that the catalyst can exert its purification performance more effectively. The engine unit of (6) above is suited to be mounted to a vehicle, and especially to a straddled vehicle.

For example, a straddled vehicle has properties that a rider shifts his/her weight for attitude control at a time of traveling, and the straddled vehicle leans towards the center of a curve for turning. Generally, the straddled vehicle is under restrictions put by the properties, in terms of the seat height and minimum ground clearance. It is therefore not easy to change the seat height and minimum ground clearance. The engine unit of (6) above is especially suited to be applied to the straddled vehicle having such properties. The engine unit of (6) above makes it possible to arrange the catalyst unit such that the catalyst unit overlaps the small-diameter long-stroke cylinder in the diameter direction of the small-diameter long-stroke cylinder, while suppressing upsizing of the small-diameter long-stroke cylinder in the diameter direction. Therefore, it is possible to arrange the catalyst unit such that the catalyst can exert its purification performance more effectively, while suppressing or not requiring a change in the seat height and/or minimum ground clearance. Since the purification performance of the catalyst is improved, driving can be easily adapted to the thermal efficiency. Accordingly, the thermal efficiency can be more improved.

In an aspect of the present teaching, a vehicle can adopt the following configuration.

(7) A vehicle including:
the spark-ignition type two-valve engine according to any one of (1) to (3); and
a vehicle wheel configured to be driven by the spark-ignition type two-valve engine.

The vehicle of (7), which includes the spark-ignition type two-valve engine according to any of (1) to (3), improves the thermal efficiency of the engine, and consequently improves the fuel consumption of the vehicle.

The single center tumble port (SCTP), which is a passage for gas to be supplied to the combustion chamber, has a function as a tumble port. The function as the tumble port is a function for causing intake air to produce a tumble flow (vertical vortex flow) in the combustion chamber. The single center tumble port (SCTP) has the wall surface that is shaped so as to cause intake air to flow into the combustion chamber in such a manner that the intake air produces a tumble flow in the combustion chamber. The structure of the single center tumble port (SCTP) for producing a tumble flow is, for example, a structure for separating a gas flow from a portion of the wall surface of the single center tumble port (SCTP) that has a tubular shape and that is continuous with the gas inlet, the portion being farthest from the gas outlet. The structure for producing a tumble flow has a projection disposed at the portion of the wall surface, for example. The structure for producing a tumble flow is not limited to this, and for example, may have a bulge portion bulging toward the outside of the port, the bulge portion being disposed at a portion upstream of the wall surface portion in the gas flow direction. The small-diameter long-stroke cylinder provided with the single center tumble port (SCTP) takes air into the cylinder bore having a relatively small diameter from the relatively large, sole tumble port, the air taking being caused by movement of the piston part by a long stroke. As a result, a fast tumble flow can be produced. The small-diameter long-stroke cylinder has a stroke length longer than the bore diameter. The ratio of the stroke to the bore diameter is, for example, preferably more than 1.0, and more preferably 1.2 or more. The ratio of the stroke to the bore diameter is, for example, 1.3 or more. The ratio of the stroke to the bore diameter is, for example, 1.5 or more.

For example, the single center tumble port (SCTP) may be configured as (i) to (iii) below.
(i) The single center tumble port (SCTP) may be provided with a gas inlet formed such that the interval between the gas inlet and the gas outlet on the center passing line passing through the center of the gas inlet and the center of the gas outlet is shorter than the diameter of the offset ignition part. Since the offset ignition part is offset, a large diameter of the gas inlet can be obtained.
(ii) The single center tumble port (SCTP) may be provided with a gas inlet formed such that the center of the cylinder bore (that is, the point through which the center line of the piston part passes) is positioned in the gas inlet when viewed in the reciprocation direction of the piston part.
(iii) The single center tumble port (SCTP) may be provided with a gas inlet formed such that in a segment of the center passing line within a region containing the gas inlet, a portion where the center passing line overlaps the gas inlet is longer than a portion where the center passing line does not overlap the gas inlet when viewed in the reciprocation direction of the piston part. This allows the gas inlet to be wide relative to the small-diameter bore. The diameter of the gas inlet may be longer than the segment of the center passing line within the region containing the gas inlet. This allows the gas inlet to be wider relative to the small-diameter bore. Here, the region containing the gas inlet means a region mainly containing the gas inlet out of two regions into which the combustion chamber is divided by a straight line that is perpendicular to the center passing line and that passes through the center of the cylinder bore when viewed in the reciprocation direction of the piston part. The center passing line means a straight line passing through the center of the cylinder bore when viewed in the reciprocation direction of the piston part.

Since gas supply to the small-diameter long-stroke cylinder is from the single center tumble port having the large intake vent as described above, it is possible to produce a faster tumble flow in the combustion chamber. The single center tumble port (SCTP), for example, may be configured to satisfy any of the followings:
- All of the above-described requirements (i) to (iii);
- The above-described requirements (i) and (ii);
- The above-described requirements (ii) and (iii);
- The above-described requirements (i) and (iii);
- The above-described requirement (i);
- The above-described requirement (ii); or
- The above-described requirement (iii).

In this Description, the port as used for the single center tumble port (SCTP) and the exhaust port indicates a gas passage provided to the small-diameter long-stroke cylinder. On the other hand, the gas inlet is an opening for intake, and the gas outlet is an opening for exhaust. The gas inlet corresponds to a boundary between the single center tumble port (SCTP) and the combustion chamber. The gas outlet corresponds to a boundary between the exhaust port and the combustion chamber.

The combustion chamber is a space defined by the piston part and the small-diameter long-stroke cylinder.

The tumble flow is a vortex around an axis that extends in a direction intersecting the reciprocation direction of the piston part. The combustion chamber gas that is producing the tumble flow may be producing other vortexes different from the tumble flow, too. For example, the combustion chamber gas may include not only the tumble flow but also a swirl flow that flows around an axis extending in the reciprocation direction of the piston part.

The tumble flow flows from the gas inlet toward the gas outlet, in an upper portion (a portion near the cylinder head) of the combustion chamber. Here, while gas in the combustion chamber includes the tumble flow, a flow reverse to a flow from the gas inlet toward the gas outlet may be included in the gas in the upper portion of the combustion chamber, for example.

The piston and the combustion chamber are circular when viewed in the reciprocation direction. Alternatively, at least one of the piston or the combustion chamber may be oval when viewed in the reciprocation direction, for example. The piston part, like the small-diameter long-stroke cylinder, has a stroke length longer than the diameter.

The separation enhancing part has a structure that causes gas being flown to the gas inlet to flow separate away from the wall surface continuous with the gas inlet such that a tumble flow is imparted to gas taken into the combustion chamber through the gas inlet. The separation enhancing part is, for example, a protrusion protruding toward a space within the single center tumble port (SCTP). The protrusion may have an edge. A recessed portion for accentuating the protrusion may be provided adjacent to the protrusion. The separation enhancing part does not always have to be one protrusion, and for example, may be a dimple, which means two or more very small concavities, formed in the wall surface.

The extending area is defined as the area that has a width equal to that of the gas inlet and that extends in the gas intake direction of the gas inlet when viewed in the reciprocation direction of the piston part. The gas intake direction corresponds to the direction of a straight line obtained as an extension of the center line of the single center tumble port (SCTP) when it is extended from the gas inlet. As the width of the gas inlet, the width of the gas inlet that is largest in a direction perpendicular to the gas intake direction is used. The extending area covers the center of the top surface of the piston part, for example, when viewed in the reciprocation direction of the piston part.

The center passing line is a straight line passing through the center of the gas outlet and the center of the gas inlet when viewed in the reciprocation direction of the piston part.

The spark-ignition type two-valve engine includes one ignition plug as the offset ignition plug, for example. The spark-ignition type two-valve engine, however, is not limited to this, and instead may include two or more offset ignition plugs, for example.

The spark-ignition type two-valve engine is a four-stroke engine, for example. The spark-ignition type two-valve engine, however, is not limited to this, and instead may be a six-stroke engine or eight-stroke engine, for example.

The position where the catalyst unit at least partially overlaps the small-diameter long-stroke cylinder includes a position where the entire catalyst unit overlaps the small-diameter long-stroke cylinder.

The vehicle includes, for example, a wheel in addition to the engine. The wheel includes a driving wheel that is rotated by receiving power outputted from the engine. The number of the wheels is not particularly limited. Nonlimiting examples of the vehicle include a four-wheel vehicle, a straddled vehicle, and the like. The four-wheel vehicle includes a cabin, for example. The straddled vehicle refers to a type of vehicle having a saddle where a driver sits astraddle. Examples of the straddled vehicle include a motorcycle, a motor tricycle, an all-terrain vehicle (ATV), and the like.

The Description herein describes a new spark-ignition type two-valve engine. In the description given below, for the purposes of explanation, numerous specific details are set forth in order to provide a thorough understanding of the present teaching.

### Advantageous Effects of Invention

The present teaching can provide a spark-ignition type two-valve engine that can improve a thermal efficiency.

### Brief Description of Drawings

[FIG. 1] (A) An internal perspective view showing an outline configuration of a spark-ignition type two-valve engine according to a first embodiment of the present teaching, when viewed in a reciprocation direction of a piston part. (B) A side cross-sectional view showing an outline configuration of the spark-ignition type two-valve engine.
[FIG. 2] A front cross-sectional view of the spark-ignition type two-valve engine shown in FIG. 1.
[FIG. 3] A perspective view showing the piston part of the spark-ignition type two-valve engine shown in FIG. 1.
[FIG. 4] An enlarged view of the spark-ignition type two-valve engine shown in FIG. 1(A).
[FIG. 5] (A) A cross-sectional view showing, on an enlarged scale, a single center tumble port (SCTP) and peripheral parts surrounding the single center tumble port (SCTP) in the spark-ignition type two-valve engine shown in FIG. 1. (B) Across-sectional view showing only the single center tumble port (SCTP) in an easy-to-see manner.
[FIG. 6] (A) A plan view illustrating an intake stroke, for explanation of a mixed gas flow in a combustion chamber of the spark-ignition type two-valve engine shown in FIG. 1. (B) A perspective view illustrating the intake stroke. (C) A plan view illustrating a compression stroke. (D) A perspective view illustrating the compression stroke.
[FIG. 7] A diagram for explanation of how to calculate a tumble ratio.
[FIG. 8] A plan view for explanation of a mixed gas inflow status in a spark-ignition type four-valve engine as a comparative example.
[FIG. 9] A graph showing the relationship of the combustion chamber diameter to the thermal efficiency in the spark-ignition type two-valve engine.
[FIG. 10] A graph showing the relationship of the stroke volume to the thermal efficiency in the spark-ignition type two-valve engine.
[FIG. 11] A graph showing the relationship of the stroke volume to the indicated thermal efficiency in an ordinary engine.
[FIG. 12] A diagram for explanation of a gas flow in the spark-ignition type two-valve engine 1 shown in FIG. 1 to FIG. 9.
[FIG. 13] (A) A diagram showing a variation of the port in the spark-ignition type two-valve engine. (B) A diagram for explanation of a gas flow in the spark-ignition type two-valve engine.
[FIG. 14] A diagram for explanation of a gas flow in a comparative example.
[FIG. 15] A graph showing tumble ratios obtained by respective configurations shown in FIG. 12, FIG. 13, and FIG. 14.
[FIG. 16] A side view of a straddled vehicle equipped with the spark-ignition type two-valve engine shown in FIG. 1.
[FIG. 17] A diagram outlining arrangement of an engine unit of the vehicle shown in FIG. 16.
[FIG. 18] A side view of a straddled vehicle of a kind different from the one shown in FIG. 16.
[FIG. 19] A diagram outlining arrangement of an engine unit of the vehicle shown in FIG. 18.
[FIG. 20] A diagram outlining arrangement of an engine unit of a kind different from the one shown in FIG. 19.

### Description of Embodiments

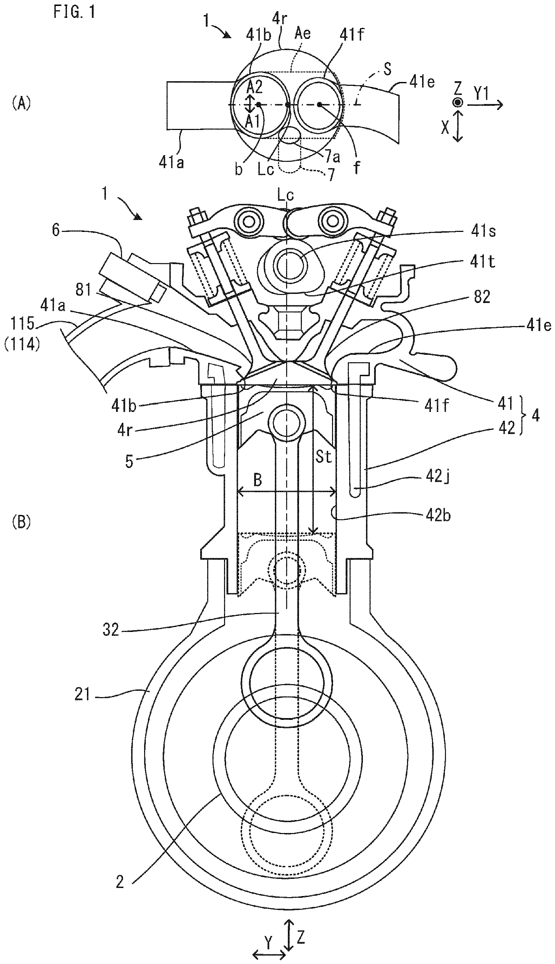

FIG. 1 is a diagram showing an outline configuration of a spark-ignition type two-valve engine according to a first embodiment of the present teaching, where: (A) is a perspective view of the inside when viewed in a reciprocation direction of a piston part; and (B) is a side cross-sectional view.

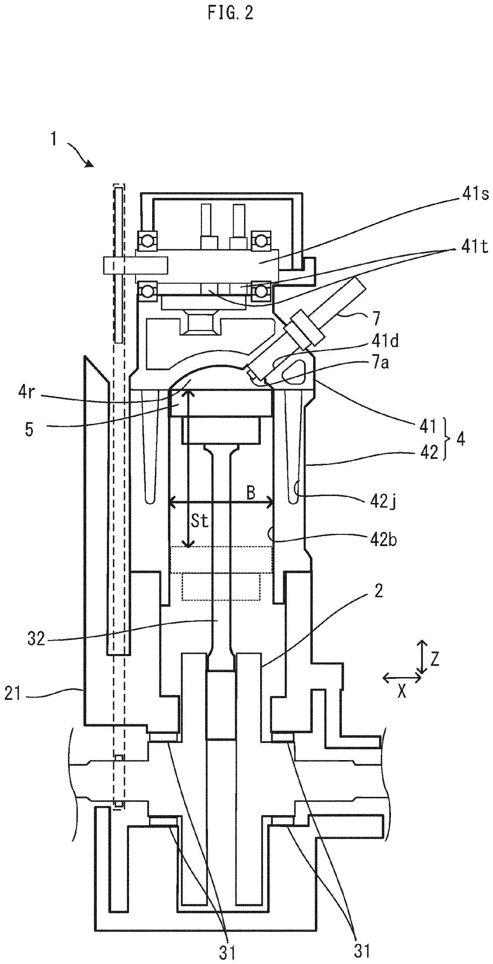

FIG. 2 is a front cross-sectional view of the spark-ignition type two-valve engine shown in FIG. 1.

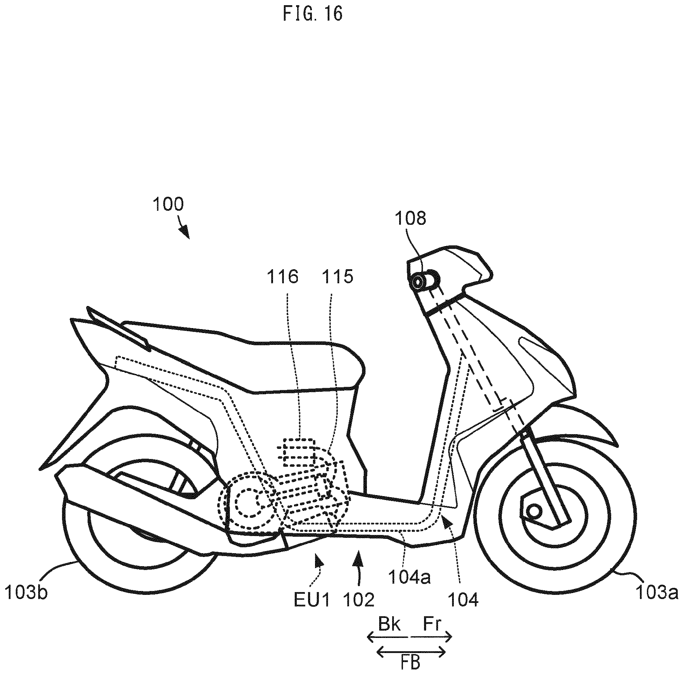

A spark-ignition type two-valve engine 1 (hereinafter, sometimes referred to simply as engine 1) shown in FIG. 1 and FIG. 2 is mounted to, for example, a straddled vehicle 100 shown in FIG. 16.

The spark-ignition type two-valve engine 1 is a single-cylinder engine. The spark-ignition type two-valve engine 1 includes a crankshaft 2, a crankcase part 21, a small-diameter long-stroke cylinder 4, a piston part 5, a fuel injection part 6, an offset ignition part 7a (offset ignition plug 7), an intake valve 81, and an exhaust valve 82. The spark-ignition type two-valve engine 1 is a single-cylinder engine. The spark-ignition type two-valve engine 1 includes one small-diameter long-stroke cylinder 4.

The small-diameter long-stroke cylinder 4 includes a cylinder head part 41 and a cylinder body part 42. The crankcase part 21, the cylinder body part 42, and the cylinder head part 41 are stacked in this order, and fastened to one another.

The cylinder body part 42 has a cylinder bore 42b formed therein. The cylinder bore 42b is a space within the cylinder body part 42. The spark-ignition type two-valve engine 1 is a water-cooled engine. The cylinder body part 42 has a coolant passage 42j.

The piston part 5 is accommodated in the cylinder bore 42b. The piston part 5 is disposed so as to be configured to reciprocate. A direction in which the piston part 5 reciprocates is referred to as reciprocation direction Z. The piston part 5 reciprocates between the top dead center as indicated by the solid line in FIG. 1 and the bottom dead center as indicated by the broken line in FIG. 1. The piston part 5 defines a combustion chamber 4r. To be specific, the piston part 5 and the small-diameter long-stroke cylinder 4 define the combustion chamber 4r. To be more specific, the piston part 5, the small-diameter long-stroke cylinder 4, the intake valve 81, and the exhaust valve 82 define the combustion chamber 4r.

The small-diameter long-stroke cylinder 4 has a stroke volume of, for example, 0.1 L or more and less than 0.2 L. The spark-ignition type two-valve engine 1 is a naturally aspirated engine. The spark-ignition type two-valve engine 1 takes in air without a turbocharger.

When viewed in the reciprocation direction Z, the combustion chamber 4r has a diameter B shorter than a reciprocation stroke length St of the piston part 5. That is, the reciprocation stroke length St of the piston part 5 is longer than the diameter B of the combustion chamber 4r. The ratio of the stroke St to the diameter B is, for example, 1.2 or more. The ratio of the stroke St to the diameter B may be, for example, 1.3 or more. When the ratio of the stroke St to the diameter B is 1.3 or more, a higher thermal efficiency is obtained. Alternatively, the ratio of the stroke St to the diameter B is, for example, 1.5 or more. In this embodiment, when the ratio of the stroke St to the diameter B is 1.5 or more, a further higher thermal efficiency is obtained.

In the spark-ignition type two-valve engine 1, the compression ratio is set higher than that in a conventional engine. The spark-ignition type two-valve engine 1 is capable of having a higher compression ratio as compared to the conventional engine while suppressing occurrence of knocking. This also contributes to improvement in the thermal efficiency of the spark-ignition type two-valve engine 1.

A maximum output rotation speed of the spark-ignition type two-valve engine 1 is set less than 6000 rpm. The maximum output rotation speed is a rotation speed that provides a maximum output. Although the spark-ignition type two-valve engine 1 has a large stroke St, a maximum movement speed of the piston part 5 is suppressed because the maximum output rotation speed is suppressed to be less than 6000 rpm.

In the spark-ignition type two-valve engine 1, the diameter B of the combustion chamber 4r is set to be in a range of 40 mm to 60 mm, for example. The stroke St is set to be in a range of 70 mm to 80 mm.

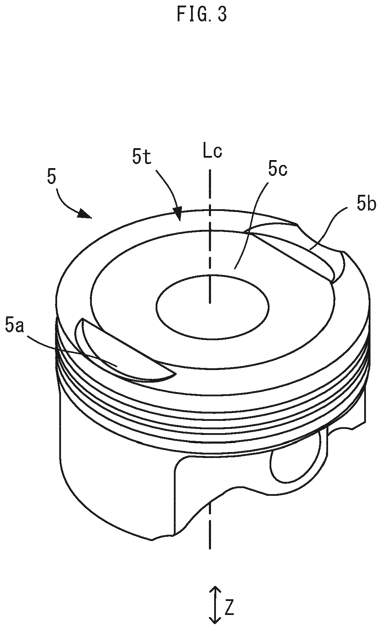

FIG. 3 is a perspective view showing the piston part of the spark-ignition type two-valve engine shown in FIG. 1.

The piston part 5 has a recessed portion 5c depressed from its surroundings, the recessed portion 5c being formed in a top surface 5t of the piston part 5. The recessed portion 5c has a circular shape when viewed in the reciprocation direction Z. The recessed portion 5c has a circular shape centered at a center line Lc of the piston part 5 when viewed in the reciprocation direction Z.

In this embodiment, the center of the piston part 5 agrees with the center of the combustion chamber 4r when viewed in the reciprocation direction Z. The center of the piston part 5 and the center of the combustion chamber 4r agree with the center line Lc when viewed in the reciprocation direction Z. Thus, the center of the piston part 5, the center of the combustion chamber 4r, and the central axis, when viewed in the reciprocation direction Z, are given the same reference sign Lc.

The top surface 5t of the piston part 5 also has valve recesses 5a, 5b for avoiding interference with the intake valve 81 and with the exhaust valve 82. The valve recesses 5a, 5b are adjacent to the recessed portion 5c. The intake valve 81 and the exhaust valve 82 are partially received in the valve recesses 5a, 5b. The recessed portion 5c is a portion separate from the valve recesses 5a, 5b, and receives neither the intake valve 81 nor the exhaust valve 82.

The crankshaft 2 shown in FIG. 1 and FIG. 2 is supported by the crankcase part 21 via a bearing 31 (see FIG. 2). The crankshaft 2 is coupled to the piston part 5 so as to be rotated in accordance with reciprocation of the piston part 5. The crankshaft 2 is coupled to the piston part 5 through a connecting rod 32. The connecting rod 32 has its one end rotatably supported by the crankshaft 2, and its opposite end rotatably supported by the piston part 5.

The direction in which the crankshaft 2 extends will be referred to as crankshaft direction X. In the drawing, a direction Y intersecting both the crankshaft direction X and the reciprocation direction Z is also shown.

The spark-ignition type two-valve engine 1 is provided with only one single center tumble port (SCTP) 41a and only one exhaust port 41e. The single center tumble port (SCTP) 41a functions as an intake port. The single center tumble port (SCTP) 41a and the exhaust port 41e are provided to the small-diameter long-stroke cylinder 4. More specifically, the single center tumble port (SCTP) 41a and the exhaust port 41e are provided to the cylinder head part 41. Each of the single center tumble port (SCTP) 41a and the exhaust port 41e communicates with the combustion chamber 4r. The cylinder head part 41 has a gas inlet 41b and a gas outlet 41f. The gas inlet 41b is an opening portion of the single center tumble port (SCTP) 41a opening to the combustion chamber 4r. The gas outlet 41f is an opening portion of the exhaust port 41e opening to the combustion chamber 4r. Gas passing through the single center tumble port (SCTP) 41a is supplied to the combustion chamber 4r through the gas inlet 41b. In the spark-ignition type two-valve engine 1, the gas inlet 41b is larger than the gas outlet 41f. The gas inlet 41b is formed such that the center of the cylinder bore 42b (that is, a point where the center line Lc of the piston part 5 passes) is located in the gas inlet 41b when viewed in the reciprocation direction Z of the piston part.

The single center tumble port (SCTP) 41a communicates with the combustion chamber 4r via the gas inlet 41b. The single center tumble port (SCTP) 41a has a structure that imparts a tumble flow to gas being taken into the combustion chamber 4r through the gas inlet 41b. The tumble flow is a flow in the combustion chamber 4r, the flow tumbling about an axis that extends in a direction intersecting the reciprocation direction Z. The structure that imparts the tumble flow will be detailed later.

The end (upstream end) of the single center tumble port (SCTP) 41a opposite to the gas inlet 41b opens to an outer surface of the cylinder head part 41. An intake passage 115 is connected to an end (upstream end) of the gas inlet 41b. More specifically, an intake tube 114 constituting the intake passage 115 is coupled to the upstream end of the gas inlet 41b.

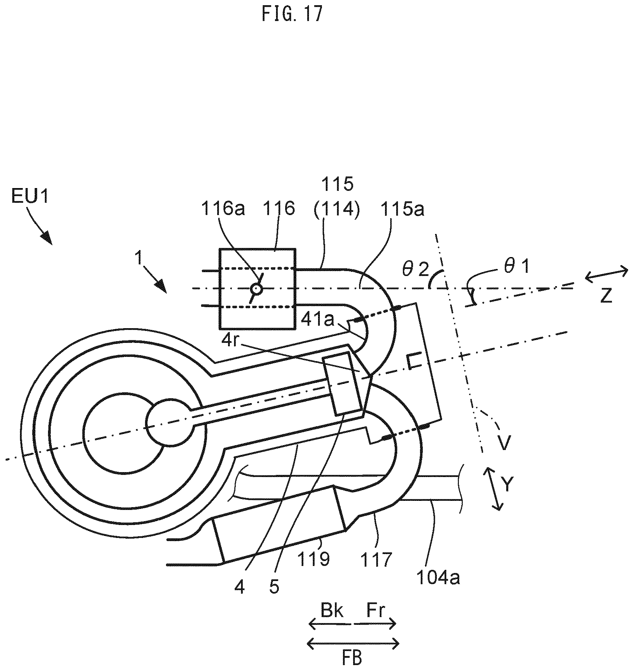

The exhaust port 41e communicates with the combustion chamber 4r via the gas outlet 41f. The exhaust port 41e is formed curving so as to extend from the gas outlet 41f at the combustion chamber 4r toward the downstream in the cylinder head part 41. The end (downstream end) of the exhaust port 41e opposite to the gas outlet 41f opens to the outer surface of the cylinder head part 41. An exhaust passage 117 (see FIG. 17) is coupled to an end (downstream end) of the gas outlet 41f.

When the small-diameter long-stroke cylinder 4 is viewed in the reciprocation direction Z, as shown in FIG. 1(A), an extending area Ae is defined as an area that has a width equal to that of the gas inlet 41b and that extends from the gas inlet 41b toward a gas intake direction Y1. The single center tumble port (SCTP) 41a and the gas inlet 41b are provided such that the extension region Ae overlaps the gas outlet 41f. In this embodiment, the gas intake direction Y1 is included in the direction Y

The fuel injection part 6 is attached so as to point toward the single center tumble port (SCTP) 41a. The fuel injection part 6 injects a fuel to the single center tumble port (SCTP) 41a. The fuel injection part 6 injects a fuel at a location upstream of the gas inlet 41b. The fuel injection part 6 injects a fuel to air supplied into the single center tumble port (SCTP) 41a, and thus produces mixed gas (hereinafter, sometimes referred to simply as gas). The gas contains the air and fuel. The gas is supplied to the combustion chamber 4r through the gas inlet 41b.

The spark-ignition type two-valve engine 1 is combusting with a theoretical air fuel ratio (stoichiometry). The fuel injection part 6 injects a fuel so as to allow the spark-ignition type two-valve engine 1 to combust with the theoretical air fuel ratio. The fuel injection part 6 injects a fuel so as to provide an air-fuel ratio in a range of 14.2 to 14.8. This corresponds to an excess air factor in a range of 0.98 to 1.02. More specifically, the spark-ignition type two-valve engine 1 detects an oxygen content in exhaust gas with an unillustrated oxygen sensor for example, and based on the detected oxygen content, injects a fuel so as to provide an air-fuel ratio in a range of 14.2 to 14.8.

The intake valve 81 opens and closes the gas inlet 41b. The exhaust valve 82 opens and closes the gas outlet 41f. The cylinder head part 41 has a camshaft 41s, which is rotatable. The camshaft 41s has a cam 41t. The camshaft 41s and the cam 41t are integrated, and rotated in conjunction with rotation of the crankshaft 2. Movement of the cam 41t causes each of the intake valve 81 and the exhaust valve 82 to linearly reciprocate, so that the gas inlet 41b and the gas outlet 41f are opened or closed.

The offset ignition plug 7 is provided to the cylinder head part 41. The offset ignition plug 7 includes the offset ignition part 7a. The offset ignition part 7a is exposed to the combustion chamber 4r. The offset ignition part 7a applies spark ignition to gas in the combustion chamber 4r.

As shown in FIG. 1(A), the combustion chamber 4r is divided into two regions, namely, a first region A1 and a second region A2, when viewed in the reciprocation direction Z. The first region A1 and the second region A2 are divided from each other by a center passing line S passing through the center f of the gas outlet 41f and the center b of the gas inlet 41b. The offset ignition part 7a is disposed in the first region A1 so as to avoid overlapping with the center passing line S.

The gas inlet 41b is formed such that the interval between the gas inlet 41b and the gas outlet 41f on the center passing line S is shorter than the diameter of the offset ignition part 7a. The offset ignition part 7a is disposed so as not to overlap the center passing line S, and thus the diameter of the gas inlet 41b can be made large.

In the small-diameter long-stroke cylinder 4, a tumble flow is imparted to gas taken from the single center tumble port (SCTP) 41a, when the piston part 5 moves toward the bottom dead center by a stroke length longer than the diameter B of the combustion chamber 4r when viewed in the reciprocation direction Z. To be specific, the small-diameter long-stroke cylinder 4 has the cylinder bore 42b in the shape of a circular column in which the piston part 5 is accommodated. The small-diameter long-stroke cylinder 4 and the piston part 5 define the combustion chamber 4r. In the small-diameter long-stroke cylinder 4, the piston part 5 moves by the stroke St longer than the diameter B of the combustion chamber 4r. The gas taken from the single center tumble port (SCTP) 41a flows mainly toward the exhaust valve 82, and then is guided by a wall surface defining the cylinder bore 42b. The tumble flow is produced in this manner. The small-diameter long-stroke cylinder 4 is provided so as to cause gas pushed by the piston part 5 to flow toward the gas inlet 41b where the intake valve 81 is disposed. The gas pushed by the piston part 5 is guided by the wall surface defining the cylinder bore 42b having a columnar shape, to flow toward the gas inlet 41b where the intake valve 81 is disposed. The tumble flow is produced in this manner, too. Details of the tumble flow will be described later.

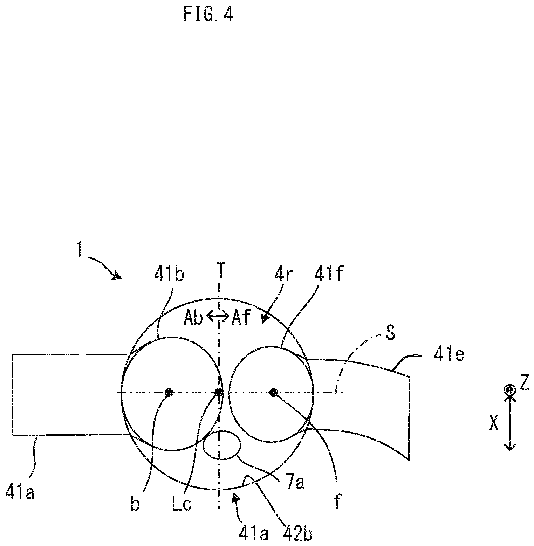

FIG. 4 is an enlarged view of the spark-ignition type two-valve engine shown in FIG. 1(A).

FIG. 4 shows the division of the combustion chamber 4r based on a viewpoint different than FIG. 1(A). Referring to FIG. 4, the combustion chamber 4r is divided into a region Ab containing the gas inlet 41b and a region Af containing the gas outlet 41f by a straight line T that is perpendicular to the center passing line S and that passes through the center line Lc of the cylinder bore 42b when viewed in the reciprocation direction Z of the piston part 5 (see FIG. 1). FIG. 4 also shows a center passing line passing through the center line Lc of the cylinder bore when viewed in the reciprocation direction Z of the piston part 5.

In this embodiment, the gas inlet 41b provided to the single center tumble port (SCTP) 41a is wide relative to the cylinder bore 42b having a small diameter. More specifically, the gas inlet 41b is provided such that: in the segment of the center passing line S within the region Ab containing the gas inlet 41b, a portion where the center passing line S overlaps the gas inlet 41b is longer than a portion where the center passing line S does not overlap the gas inlet 41b, when viewed in the reciprocation direction Z.

Since the single center tumble port (SCTP) 41a has such a large intake vent 41b through which gas is supplied to the small-diameter long-stroke cylinder 4, it is possible to produce a fast tumble flow in the combustion chamber 4r.

For instance, in the example shown in FIG. 4, the portion within the region Ab where the center passing line S does not overlap the gas inlet 41b has a length of substantially zero. That is, the gas inlet 41b is disposed so as to be inscribed in the combustion chamber 4r, when viewed in the reciprocation direction Z. The center line Lc of the cylinder bore 42b is within a range of the gas inlet 41b, when viewed in the reciprocation direction Z.

The diameter of the combustion chamber 4r is more than 40 mm and less than 60 mm, for example. In this case, a segment of the center passing line S within the region Ab containing the gas inlet 41b is longer than 20 mm and shorter than 30 mm. A portion of the segment where the center passing line S overlaps the gas inlet 41b is longer than 20 mm and shorter than 30 mm. In the example shown in FIG. 4, the portion on the center passing line S within the region Ab containing the gas inlet 41b where the center passing line S overlaps the gas inlet 41b is longer than 20 mm and shorter than 30 mm. Here, the diameter of the combustion chamber 4r, the length of the center passing line S within the region Ab containing the gas inlet 41b, the length of the portion where the center passing line S overlaps the gas inlet 41b, and the length where they do not overlap are not limited to the ranges mentioned above.

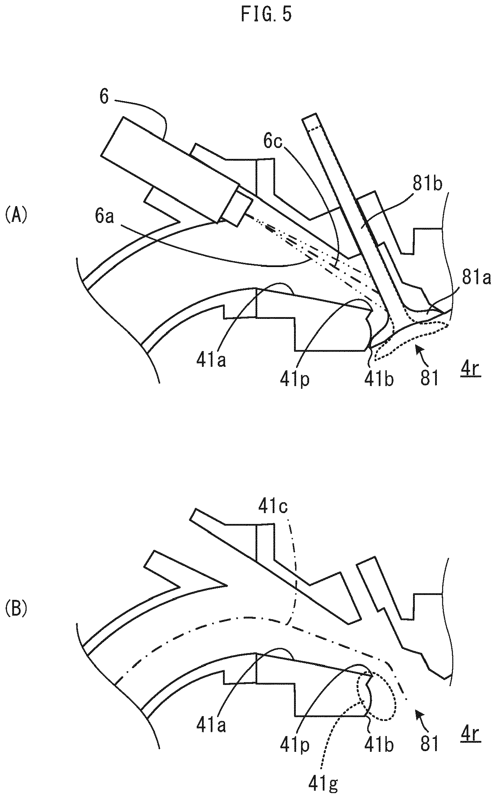

FIG. 5 is a cross-sectional view showing, on an enlarged scale, the single center tumble port (SCTP) and peripheral parts surrounding the single center tumble port (SCTP) in the spark-ignition type two-valve engine shown in FIG. 1. FIG. 5(A) shows the positions of the intake valve 81 and the fuel injection part 6 as well as the single center tumble port (SCTP) 41a. FIG. 5(B) is a cross-sectional view showing only the single center tumble port (SCTP) 41a in an easy-to-see manner.

As described above, the spark-ignition type two-valve engine 1 is provided with the only one single center tumble port (SCTP) 41a. The single center tumble port (SCTP) 41a has an inner wall extending into a tubular shape.

The intake valve 81 includes an umbrella portion 81a and a stem portion 81b. The umbrella portion 81a is discoid. The stem portion 81b is columnar, and is continuous with the umbrella portion 81a. The umbrella portion 81a of the intake valve 81 opens or closes the gas inlet 41b of the single center tumble port (SCTP) 41a.

The single center tumble port (SCTP) 41a has a structure that imparts a tumble flow to gas being taken into the combustion chamber 4r through the gas inlet 41b. In detail, the inner wall of the single center tumble port (SCTP) 41a has a separation enhancing part 41p. The separation enhancing part 41p has a structure that causes gas being flown to the gas inlet 41b to flow separate away from a wall surface continuous with the gas inlet 41b such that a tumble flow is imparted to gas taken into the combustion chamber 4r through the gas inlet 41b. In detail, the separation enhancing part 41p has a structure that separates gas from a portion 41g of the circumference defining the gas inlet 41b of the single center tumble port (SCTP) 41a, the portion 41g being farthest from at least the gas outlet 41f (see FIG. 1). In more detail, the wall surface constituting the single center tumble port (SCTP) 41a has an annular portion adjacent to the gas inlet 41b, and the separation enhancing part 41p having a folded-back shape is disposed at the portion 41g of the annular portion farthest from at least the gas outlet 41f, in a cross-sectional view taken through the gas inlet 41b and the gas outlet 41f. The separation enhancing part 41p is shaped so as to be folded back steeply away from the center line 41c of the single center tumble port (SCTP) 41a. In other words, the separation enhancing part 41p is shaped so as to be folded back steeply away from the gas outlet 41f.

Referring to FIG. 5, the separation enhancing part 41p is a protrusion protruding toward a space within the single center tumble port (SCTP) 41a. The separation enhancing part 41p is a protrusion ridge extending along the annular shape of the inner wall at a location upstream of the gas inlet 41b in a gas flow direction. That is, the separation enhancing part 41p extends along the circumference of the gas inlet 41b. The separation enhancing part 41p does not make a full round of the inner wall, however. The single center tumble port (SCTP) 41a has an annular belt-shaped portion continuous with the gas inlet 41b, and has the separation enhancing part 41p disposed at a portion of the annular belt-shaped portion farthest from the gas outlet 41f. The separation enhancing part 41p has an edge. Thus, the inner wall of the single center tumble port (SCTP) 41a shown in FIG. 5 has a discontinuity at the separation enhancing part 41p with respect to an extension direction of the single center tumble port (SCTP) 41a. The separation enhancing part 41p has a right angle or an acute angle in the cross-sectional view shown in FIG. 5. The separation enhancing part 41p has an acute angle in the cross-sectional view shown in FIG. 5 for example.

The separation enhancing part 41p has a folded-back shape, but in a microscopic view, it does not always need to have the edge like the one shown in FIG. 5.

Gas that flows in the single center tumble port (SCTP) 41a toward the gas inlet 41b while being contacted by the wall surface is separated from the wall surface at the separation enhancing part 41p. The gas cannot flow along the steeply folded-back shape. Thus, a flow going away from the gas outlet 41f is reduced. As a result, in a gas flow being taken into the combustion chamber 4r through a gap between the gas inlet 41b and the intake valve 81, a flow going from the gas inlet 41b toward the gas outlet 41f is faster than flows going in other directions. The flow going from the gas inlet 41b toward the gas outlet 41f produces a tumble flow in the combustion chamber 4r. Details of the tumble flow will be described later.

The spark-ignition type two-valve engine 1 is an engine of intake tube injection type. The fuel injection part 6 is arranged so as to inject a fuel toward the gas inlet 41b of the single center tumble port (SCTP) 41a. The fuel injection part 6 injects an atomized fuel into an injection range 6a having a conical shape. The density of the injected fuel increases at a location closer to a center 6c of the injection range 6a. At the center 6c of the injection range 6a, the fuel density is maximum.

The fuel injection part 6 is arranged such that the center 6c of the fuel injection range 6a does not intersect the separation enhancing part 41p of the single center tumble port (SCTP) 41a. The fuel injection part 6 is arranged such that the center 6c of the fuel injection range intersects the stem portion 81b of the intake valve 81. The center 6c of the injection range 6a, where the fuel density is maximum, does not intersect the separation enhancing part 41p. This can suppress occurrence of a situation where the fuel adheres to the separation enhancing part 41p and is condensed in the vicinity of the separation enhancing part 41p. This can consequently suppress occurrence of a situation where the condensed fuel forms a large mass (droplet) and intermittently enters the combustion chamber 4r. An unintended intermittent variation of fuel supply from the single center tumble port (SCTP) 41a can be suppressed. Accordingly, the thermal efficiency is improved.

More specifically, the fuel injection part 6 is arranged such that the injection range 6a does not intersect the separation enhancing part 41p of the single center tumble port (SCTP) 41a. This can further suppress occurrence of the situation where the fuel adheres to the separation enhancing part 41p and is condensed in the vicinity of the separation enhancing part 41p. Accordingly, the thermal efficiency is further improved.

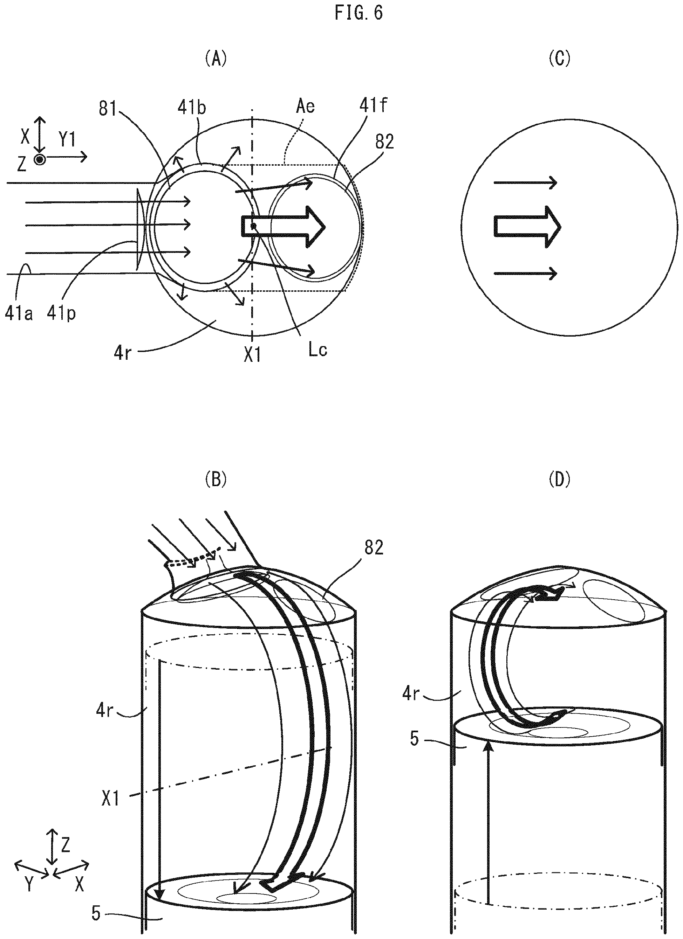

FIG. 6 is a diagram for explanation of a mixed gas flow in the combustion chamber of the spark-ignition type two-valve engine shown in FIG. 1. (A) is a plan view illustrating an intake stroke, and (B) is a perspective view illustrating the intake stroke. (C) is a plan view illustrating a compression stroke, and (D) is a perspective view illustrating the compression stroke.

As shown in FIG. 6(A), (B), in the intake stroke, the piston part 5 moves from the top dead center toward the bottom dead center. In the intake stroke, the intake valve 81 opens the gas inlet 41b. As a result, gas flows through the single center tumble port (SCTP) 41a and the gas inlet 41b, into the combustion chamber 4r.

As shown in FIG. 6(A), the extending area Ae extending from the gas inlet 41b toward the gas intake direction Y1 covers the gas outlet 41f when viewed in the reciprocation direction Z. Due to the structure of the single center tumble port (SCTP) 41a, most of the gas having flowed toward the gas intake direction Y1 in the single center tumble port (SCTP) 41a and entered the combustion chamber 4r via the gas inlet 41b flows toward where the gas outlet 41f is disposed, that is, toward the gas intake direction Y1, as shown in FIG. 6(A). More specifically, the gas flow in the single center tumble port (SCTP) 41a is separated from the wall surface of the single center tumble port (SCTP) 41a by the separation enhancing part 41p. As a result, as shown in FIG. 6(A), in the gas flow being taken into the combustion chamber 4r through the annular gap between the gas inlet 41b and the intake valve 81, a flow going from the gas inlet 41b toward the gas outlet 41f is larger and faster than flows going in other directions. In FIG. 6(A) to (D), the fast flow is indicated by the bold arrowed line. Most of the gas having entered the combustion chamber 4r from the gas inlet 41b flows along a valve surface of the exhaust valve 82, and as if being pulled in by the piston part 5, flows toward a position of the piston part 5 corresponding to the bottom dead center. As a result, a tumble flow is produced in the combustion chamber 4r. The tumble flow is a vortex around an axis X1 extending in a direction that intersects the reciprocation direction Z. In an example of this embodiment shown in FIG. 6, the axis X1 is substantially parallel to the crankshaft direction X. Here, a flow in the combustion chamber 4r may sometimes include a swirl flow, which is a vortex around the center line Lc, in addition to the tumble flow. In this case, the axis of a tumble flow component is not substantially parallel to the crankshaft direction X.

The spark-ignition type two-valve engine 1 is provided with the only one gas inlet 41b of the single center tumble port (SCTP) 41a and the only one gas outlet 41f of the exhaust port 41e. Unlike an engine provided with three or more intake vents and exhaust vents for example, the one gas inlet 41b and the one gas outlet 41f are disposed so as to overlap the same diameter of the combustion chamber 4r when viewed in the reciprocation direction Z. In other words, the one gas inlet 41b and the one gas outlet 41f are disposed on a straight line that passes through the center line Lc of the combustion chamber 4r and that is parallel to the gas intake direction Y1, when viewed in the reciprocation direction Z. Thus, in a gas flow having entered the combustion chamber 4r from the gas inlet 41b, a gas flow flowing near the center line Lc is the fastest.

The gas inlet 41b provided in the spark-ignition type two-valve engine, 1 is larger as compared to, for example, a case where two or more intake vents are provided. As a result, a gas flow from the gas inlet 41b toward the gas outlet 41f occurs with a large width, when viewed in the reciprocation direction Z. A central portion of the gas flow, which flows near the center line Lc, is the fastest.

The offset ignition part 7a (see FIG. 1) of the spark-ignition type two-valve engine 1 is disposed in the first region A1 of the combustion chamber, so as not to overlap the center passing line S. The gas inlet 41b, therefore, can be larger as compared to, for example, a configuration having an ignition part disposed at the center of the combustion chamber 4r when viewed in the reciprocation direction Z. This also contributes to causing a gas flow from the gas inlet 41b toward the gas outlet 41f to occur with a large width.

In this manner, gas having entered the combustion chamber 4r from the gas inlet 41b forms a tumble flow with a large width, of which the central portion in a width direction (in this embodiment, the direction along the axis X1) flows fast.

In the spark-ignition type two-valve engine 1, as compared to a configuration having two or more intake vents for example, the gas inlet 41b can be larger than each of the two or more intake vents. The size of the gas inlet 41b, however, is smaller than the sum total of respective areas of the two or more intake vents in the case where the two or more intake vents are provided for example. Since a smaller opening allows gas to pass therethrough at a higher flow velocity, gas passing through the gas inlet 41b of the single center tumble port (SCTP) 41a produces a faster tumble flow as compared to a configuration having two or more intake vents.

In the spark-ignition type two-valve engine 1, the piston part 5 has the reciprocation stroke length St (see FIG. 1) longer than the diameter B of the combustion chamber 4r. Therefore, the piston part 5 moves toward the bottom dead center at a high movement speed. Thus, a gas flow entering the combustion chamber 4r from the gas inlet 41b as a result of movement of the piston part 5 is fast. Accordingly, a fast tumble flow is produced.

In this manner, in the combustion chamber 4r, a tumble flow with a large width, of which the central portion in the width direction flows fastest, is produced as shown in FIG. 6(B). The tumble flow of which a center portion flows fastest is produced by movement of the piston part 5 moving over the stroke St longer than the diameter B of the combustion chamber 4r. The tumble flow of which the central portion in the width direction flows fastest suppresses disturbance of the flow. Such a tumble flow is likely to keep its speed for a long period.

The single center tumble port (SCTP) 41a of the spark-ignition type two-valve engine 1 allows a tumble flow having a tumble ratio of more than 0.3 to occur in the small-diameter long-stroke cylinder 4.

The tumble ratio is an index of the tumble flow intensity. The tumble ratio is an index of the tumble flow velocity.

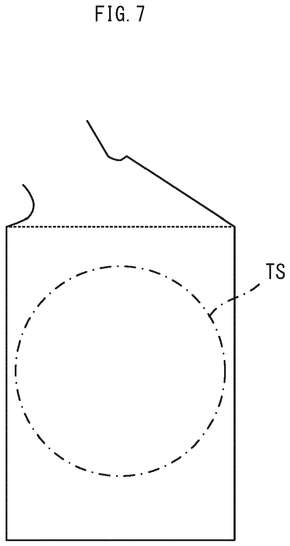

FIG. 7 is a diagram for explanation of how to calculate the tumble ratio. FIG. 7 schematically shows an internal structure of the small-diameter long-stroke cylinder 4.

To calculate the tumble ratio, a space called a tumble sphere TS is defined in the small-diameter long-stroke cylinder 4. The tumble ratio is calculated based on the angular velocity of gas in a spherical body of the tumble sphere TS.

In the compression stroke subsequent to the intake stroke, as shown in FIG. 6(D), the piston part 5 moves toward the top dead center. In the intake stroke, gas goes out of the gas inlet 41b, flows along the valve surface of the exhaust valve 82, and flows toward the piston part 5 as shown in FIG. 6(B), and then in the compression stroke, the gas is pushed by the piston part 5 as shown in FIG. 6(D). The gas pushed by the piston part 5 flows toward the gas inlet 41b. In this manner, the tumble flow is maintained. The stroke St over which the piston part 5 moves is longer than the diameter B of the combustion chamber 4r. Thus, the movement speed of the piston part 5 in the compression stroke is high. Accordingly, due to the gas pushed by the piston part 5, a fast tumble flow is easily maintained.

At a time point of spark ignition, the fast tumble flow in the combustion chamber 4r changes into a fast turbulent flow. As a result, flame propagates in a short period.

The combustion chamber 4r has the diameter B shorter than the reciprocation stroke length St of the piston part 5, when viewed in the reciprocation direction Z. Since the diameter B is short, the combustion chamber 4r defined by the piston part 5 while the piston part 5 is at the top dead center has a reduced flatness. Accordingly, a maximum distance over which flame propagates in flame propagation after ignition is performed by the offset ignition part 7a is short. This contributes to shortening of combustion time.

The offset ignition part 7a of the spark-ignition type two-valve engine 1 is arranged at a position that is offset from the center of the combustion chamber 4r, when viewed in the reciprocation direction Z. The position of the offset ignition part 7a being offset may influence the combustion time, but the spark-ignition type two-valve engine 1 of this embodiment provides the fast tumble flow and the shortened maximum distance of flame propagation, and therefore can suppress such an influence.

In this manner, the fast tumble flow is maintained in the combustion chamber while the distance over which flame propagates is shortened. Thus, a time required for gas combustion is shortened. Since a tumble having a tumble ratio of more than 0.3 is formed, the time required for gas combustion is further shortened. Since the time required for combustion is shortened, the thermal efficiency of the spark-ignition type two-valve engine 1 is improved.

In the spark-ignition type two-valve engine 1, the time required for combustion is shortened, so that occurrence of knocking is suppressed. In addition, occurrence of knocking can be suppressed by the fact that the spark-ignition type two-valve engine 1 is a water-cooled engine. Accordingly, the compression ratio of the spark-ignition type two-valve engine 1 can be set higher than that of a conventional engine, with suppression of occurrence of knocking. Consequently, the thermal efficiency of the spark-ignition type two-valve engine 1 can be further improved.

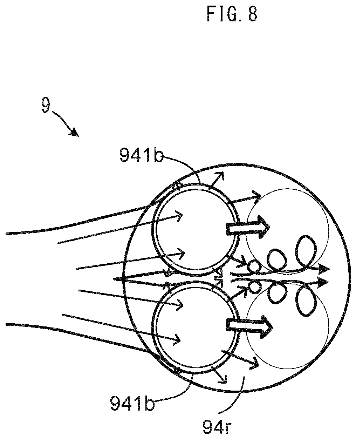

FIG. 8 is a plan view for explanation of a mixed gas inflow status in a spark-ignition type four-valve engine as a comparative example.

In the comparative example shown in FIG. 8, an engine 9 is provided with four valves, and two intake vents 941b. The fastest ones of gas flows having entered a combustion chamber 94r from the respective intake vents 941b are flows that are directed obliquely to a gas intake direction so as to flow apart from each other.

In the engine of the comparative example shown in FIG. 8, the two gas intake vents 941b are separately disposed. Therefore, a gas flow coming from each intake vent 941b is slower as compared to this embodiment provided with one gas inlet 41b (see FIG. 6).

Besides, of the gas flows having entered the combustion chamber 94r from the respective intake vents 941b, flows that are directed obliquely to the gas intake direction so as to approach each other, collide against each other at a central portion to be disturbed. This hinders flows that contribute to a tumble flow. A gas flow that is most contributory to the tumble flow is divided into two. Consequently, the tumble flow has a low speed, even if a stroke over which a piston 95 moves is equivalent to that of this embodiment. Moreover, the disturbance of the tumble flow is likely to cause disturbance of a stream pushed by the piston while the piston is moving toward the top dead center in the compression stroke. Accordingly, the tumble flow tends to be attenuated.

In the spark-ignition type two-valve engine 1 of this embodiment, as shown in FIG. 6, gas that is taken into the combustion chamber 4r from the only one single center tumble port (SCTP) 41a forms a tumble flow of which the central portion in the flow width direction flows fast. A gas flow that is taken into the combustion chamber 4r from the gas inlet 41b having a smaller area as compared to the configuration having two intake vents 941b for example, moves at a high speed due to the piston moving at a high speed over a stroke length longer than the diameter B of the combustion chamber 4r in the intake stroke. This causes a fast tumble flow. In the compression stroke, the piston returning at a high speed pushes back the gas flow toward where the intake valve 81 is disposed. This causes a faster tumble flow.

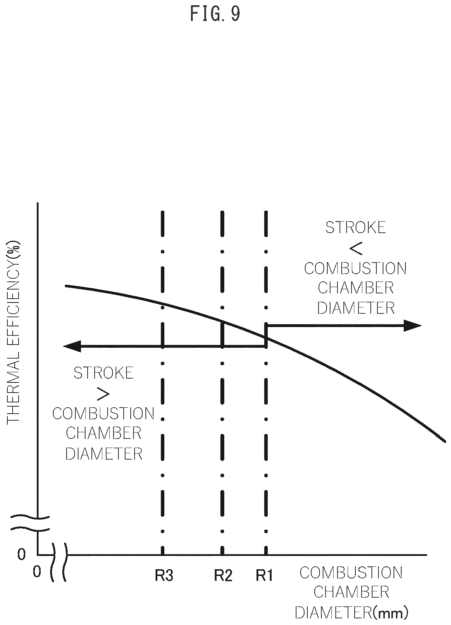

FIG. 9 is a graph showing the relationship of the combustion chamber diameter to the thermal efficiency in the spark-ignition type two-valve engine.

FIG. 9 shows, as an example, a result of calculating the thermal efficiency (indicated thermal efficiency) under different combustion chamber diameters, different piston part strokes, and a fixed stroke volume (displacement) of 0.15 L in a spark-ignition type two-valve engine. The spark-ignition type two-valve engine subjected to simulation had the same configuration as shown in FIG. 1 and FIG. 2, except for the combustion chamber diameter and the piston part stroke. Thus, the spark-ignition type two-valve engine subjected to calculation included the single center tumble port (SCTP) 41a.

In the graph shown in FIG. 9, the piston part stroke is longer than the combustion chamber diameter in a region where the combustion chamber diameter is less than R1, that is, in a region to the left of R1 in FIG. 9.

In the graph shown in FIG. 9, the piston part stroke is longer than 1.2 times the combustion chamber diameter in a region where the combustion chamber diameter is less than R2, that is, in a region to the left of R2 in FIG. 9.

In the graph shown in FIG. 9, the piston part stroke is longer than 1.5 times the combustion chamber diameter in a region where the combustion chamber diameter is less than R3, that is, in a region to the left of R3 in FIG. 9.

In the spark-ignition type two-valve engine 1 including the single center tumble port (SCTP) 41a and the offset ignition part 7a, as shown in FIG. 9, the piston part stroke St is longer than the combustion chamber diameter B, and therefore, a high thermal efficiency can be obtained.

In the region where the piston part stroke is longer than 1.2 times the combustion chamber diameter, the degree of increase in the indicated thermal efficiency is substantially saturated. The indicated thermal efficiency is less likely to increase relative to an increase in the stroke. In the region where the piston part stroke is longer than 1.2 times the combustion chamber diameter, the indicated thermal efficiency is higher.

In the region where the piston part stroke is longer than 1.5 times the combustion chamber diameter, the degree of increase in the indicated thermal efficiency is further saturated. The indicated thermal efficiency is still less likely to increase relative to an increase in the stroke. In the region where the piston part stroke is longer than 1.5 times the combustion chamber diameter, an increase in the indicated thermal efficiency due to an increase in the movement speed of the piston part is more stable.

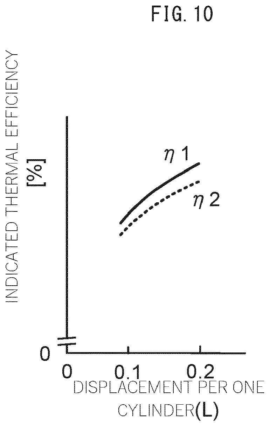

FIG. 10 is a graph showing the relationship of the engine stroke volume to the thermal efficiency.

The graph of FIG. 10 shows the relationship of the engine stroke volume to the thermal efficiency under the condition that the compression ratio is fixed. In the graph of FIG. 10, the horizontal axis represents the engine stroke volume. The stroke volume is the stroke volume (displacement) per one cylinder. The vertical axis represents the thermal efficiency (indicated thermal efficiency). In the graph, the solid line η1 indicates a result of trial calculation of the thermal efficiency based on an engine model provided with the single center tumble port (SCTP) according to this embodiment. In the graph, the broken line η2 indicates a result of trial calculation of the thermal efficiency based on an engine model provided with no single center tumble port (SCTP).

The spark-ignition type two-valve engine 1 having a stroke volume of less than 0.2 L is likely to have a lowered thermal efficiency, but this embodiment can suppress lowering of the thermal efficiency by maintaining a tumble flow thanks to the presence of the single center tumble port (SCTP) 41a and the piston part stroke St being longer than the combustion chamber diameter B. Specifically, with a stroke volume of less than 0.2 L, this embodiment can provide the thermal efficiency (η1) higher than the thermal efficiency (η2) provided by the configuration not including the single center tumble port (SCTP) 41a, nor the piston part stroke St.

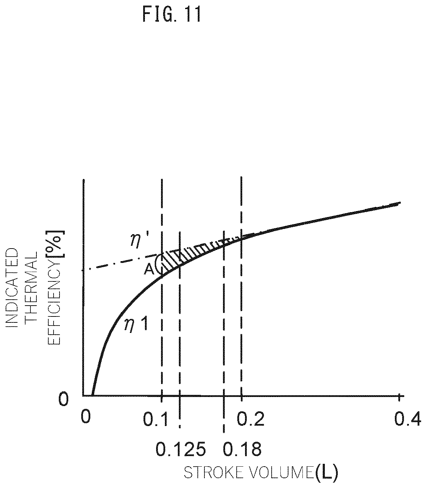

FIG. 11 is a graph showing the relationship of the stroke volume to the indicated thermal efficiency in an ordinary engine.

FIG. 11 shows, as a reference example, the stroke volume and the indicated thermal efficiency in an ordinary engine. The indicated thermal efficiency is the thermal efficiency with no mechanical loss taken into account. In the reference example, the piston part stroke is equal to the combustion chamber diameter.

The indicated thermal efficiency of an ordinary engine as typified by the reference example of FIG. 11 tends to be lowered as the engine size is reduced, due to the relationship between the volume and surface area. This is because the volume is closely related to the amount of heat generation while the surface area is closely related to a thermal loss caused by heat radiation.

As shown in FIG. 11, when the engine stroke volume is less than 0.2 L, lowering of the indicated thermal efficiency along with a reduction in the stroke volume is accelerated. That is, the deviation becomes larger from the straight line (alternate long and short dash line) η' indicating the tendency in a large-sized engine of 0.4 L or more, for example. The lowering of the indicated thermal efficiency is conspicuous when the stroke volume is less than 0.15 L. Specifically, the deviation from the straight line (alternate long and short dash line) η' is revealed when the stroke volume is less than 0.2 L, and becomes conspicuous when the stroke volume is less than 0.18 L.

In the spark-ignition type two-valve engine 1 shown in FIG. 1 to FIG. 9, diameter long-stroke cylinder 4 from the single center tumble port (SCTP) 41a including the separation enhancing part 41p (see FIG. 5) forms a fast tumble flow. The increase in the indicated thermal efficiency can compensate for lowering of the indicated thermal efficiency that would be caused if an ordinary engine is downsized to have a stroke volume of down to 0.1 L. The configuration shown in FIG. 1 to FIG. 9, therefore, can improve the thermal efficiency of a spark-ignition type two-valve engine that is provided with the small-diameter long-stroke cylinder 4 and the single center tumble port (SCTP) 41a including the separation enhancing part 41p and that has a stroke volume of 0.1 L or more and less than 0.2 L.

In a case of a spark-ignition type two-valve engine having a stroke volume of 0.125 L or more, an increase in the indicated thermal efficiency obtained by formation of the tumble flow is enough to cover lowering of the indicated thermal efficiency caused by downsizing.

The thermal efficiency of a spark-ignition type two-valve engine of less than 0.2 L, whose lowering is conspicuous, especially in an engine like the one shown in the reference example, can be improved by the configuration shown in FIG. 1 to FIG. 9.

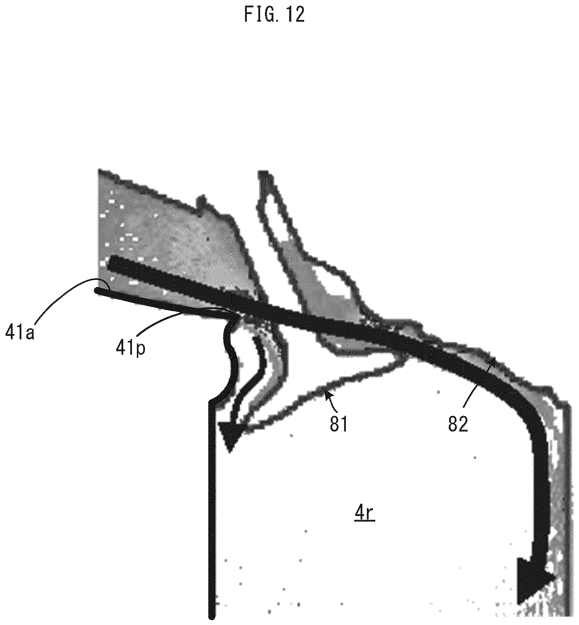

FIG. 12 is a diagram for explanation of a gas flow in the spark-ignition type two-valve engine 1 shown in FIG. 1 to FIG. 9. FIG. 12 shows a simulated gas flow in the intake stroke of the spark-ignition type two-valve engine 1 shown in FIG. 1 to FIG. 9. A higher density (higher darkness) indicates a faster flow velocity.

Gas taken into the small-diameter long-stroke cylinder 4 from the single center tumble port (SCTP) 41a is likely to be separated from the wall surface at the separation enhancing part 41p. The separated gas tends to flow in the extension direction of the single center tumble port (SCTP) 41a. Accordingly, part of the gas taken into the combustion chamber 4r from the single center tumble port (SCTP) 41a, the part flowing toward the valve surface of the exhaust valve 82, has an increased flow rate and an increased speed. On the other hand, part of the gas taken into the combustion chamber 4r, the part being taken through a position farther from the exhaust valve 82 than the intake valve 81, has a reduced amount and a reduced flow velocity.

Consequently produced is a fast tumble flow that flows along the valve surface of the exhaust valve 82 and then flows toward the piston part 5 (FIG. 1).

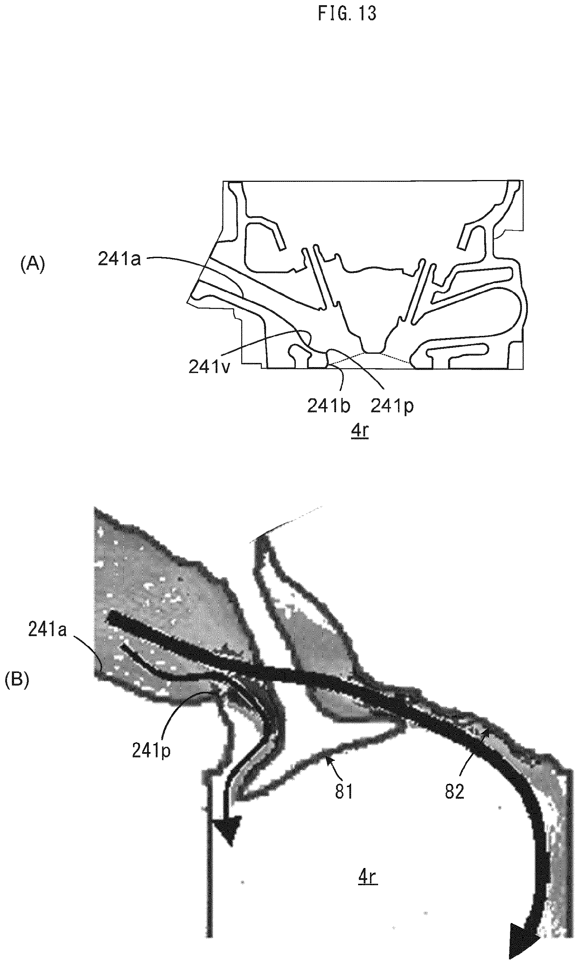

FIG. 13(A) is a diagram showing a variation of the port in the spark-ignition type two-valve engine. FIG. 13(B) is a diagram for explanation of a gas flow in the spark-ignition type two-valve engine shown in FIG. 13(A). FIG. 13(B) shows a result of simulating a gas flow in the intake stroke.

A single center tumble port (SCTP) 241a shown in FIG. 13(A) has a separation enhancing part 241p. The separation enhancing part 241p has a structure that causes gas being flown to the gas inlet 241b to flow separate away from a wall surface continuous with the intake vent 241b such that a tumble flow is imparted to gas taken into the combustion chamber 4r (see FIG. 5) through the gas inlet 241b. In detail, the separation enhancing part 241p has a structure that separates gas from a portion of the circumference defining the gas inlet 241b of the single center tumble port (SCTP) 241a, the portion being farthest from at least the gas outlet 41f (see FIG. 1). In more detail, the wall surface constituting the single center tumble port (SCTP) 241a has an annular belt-shaped portion adjacent to the gas inlet 241b, and the separation enhancing part 241p having a folded-back shape is disposed at a portion of the annular belt-shaped portion farthest from at least the gas outlet 41f, in a cross-sectional view taken through the gas inlet 241b and the gas outlet 41f (see FIG. 1). The separation enhancing part 41p is shaped so as to be folded back steeply away from the center line of the single center tumble port (SCTP) 241a. In other words, the separation enhancing part 241p is shaped so as to be folded back steeply away from the gas outlet 41f. The separation enhancing part 241p is shaped so as to be folded back at a right angle or an acute angle in a cross-sectional view taken through the gas inlet 241b and the gas outlet 41f (see FIG. 1). In a cross-sectional view shown in FIG. 13(A), the separation enhancing part 241p is shaped so as to be folded back at a substantially right angle. In a microscopic view, the separation enhancing part 241p has no edge, but has a shape folded back to form a curved surface.

The separation enhancing part 241p is a protrusion protruding toward the inside of the single center tumble port (SCTP) 241a.

The single center tumble port (SCTP) 241a shown in FIG. 13(A) has a recessed portion 241v at a location upstream of the separation enhancing part 241p in a gas flow direction. The recessed portion 241v is adjacent to the separation enhancing part 241p, and forms a curved surface in a cross-sectional view taken along an extension direction of the single center tumble port (SCTP) 241a. The separation enhancing part 241p is shaped so as to be folded back steeply away from the gas outlet 41f, due to the recessed portion 241v being disposed adjacent thereto.

Accordingly, an inner wall of the single center tumble port (SCTP) 241a is substantially discontinuous at the separation enhancing part 241p in the extension direction of the single center tumble port (SCTP) 241a. Due to the recessed portion 241v and the separation enhancing part 241p, gas is separated from the wall surface.

As shown in FIG. 13(B), gas being taken into the small-diameter long-stroke cylinder 4 from the single center tumble port (SCTP) 241a is likely to be separated from the wall surface at the separation enhancing part 241p. The separated gas tends to flow in the extension direction of the single center tumble port (SCTP) 241a. Accordingly, part of the gas taken into the combustion chamber 4r from the single center tumble port (SCTP) 241a, the part flowing toward the valve surface of the exhaust valve 82, has an increased flow rate and an increased speed. On the other hand, part of the gas taken into the combustion chamber 4r, the part being taken through a position farther from the exhaust valve 82 than the intake valve 81, has a reduced amount and a reduced flow velocity.

Consequently, a fast tumble flow that flows along the valve surface of the exhaust valve 82 and then flows toward the piston part 5 (FIG. 1) is produced.

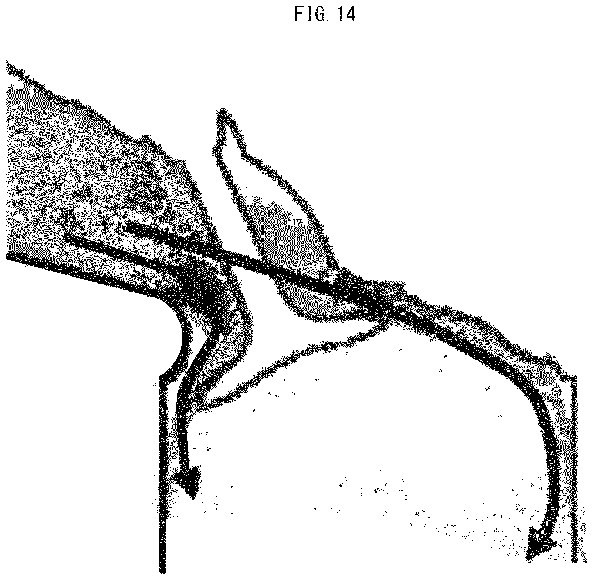

FIG. 14 is a diagram for explanation of a gas flow in a comparative example.

A single center tumble port (SCTP) shown in FIG. 14 has no separation enhancing part 241p. Gas passing through the single center tumble port (SCTP) is less likely to be separated from the wall surface. Accordingly, part of gas taken into the combustion chamber 4r from the single center tumble port (SCTP) 241a, the part flowing toward the valve surface of the exhaust valve 82, has a reduced flow rate and a reduced speed. On the other hand, part of the gas taken into the combustion chamber 4r, the part being taken through a position farther from the exhaust valve 82 than the intake valve 81, has an increased amount and an increased flow velocity as compared to the case shown in FIG. 13(B) for example.

Consequently, a tumble flow that flows along the valve surface of the exhaust valve 82 and then flows toward the piston part 5 (FIG. 1) is slow.

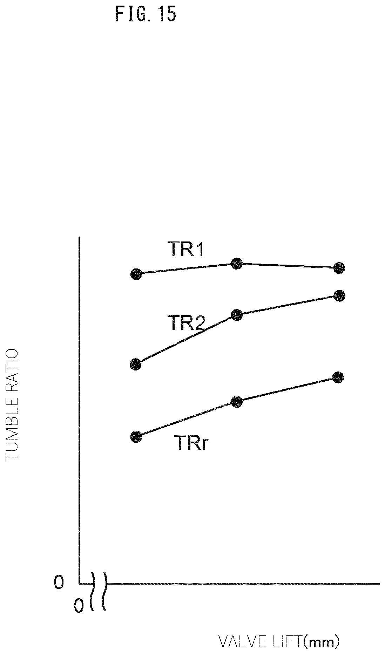

FIG. 15 is a graph showing tumble ratios obtained by the respective configurations shown in FIG. 12, FIG. 13, and FIG. 14.

In the graph, TR1 indicates the tumble ratio obtained by the configuration shown in FIG. 12. TR2 indicates the tumble ratio obtained by the configuration shown in FIG. 13. TRr indicates the tumble ratio obtained by the configuration according to the comparative example shown in FIG. 14. The tumble ratios are plotted against varying valve lifts of the intake valve 81.

The configurations according to the embodiments shown in FIG. 12 and FIG. 13 provide higher tumble ratios as compared to the comparative example.

FIG. 16 is a side view of a straddled vehicle equipped with the spark-ignition type two-valve engine shown in FIG. 1.

A straddled vehicle 100 shown in FIG. 16 includes a vehicle body 102 and wheels 103a, 103b. The straddled vehicle 100 is a motorcycle. The straddled vehicle 100 is a scooter-type vehicle. The rear wheel 103b is a driving wheel. The vehicle body 102 has a frame 104. The frame 104 includes a down frame 104a.

The straddled vehicle 100 includes an acceleration instruction unit 108. The acceleration instruction unit 108 is an operator used to provide instruction to accelerate the straddled vehicle 100 in accordance with an operation performed thereon. The acceleration instruction unit 108 is displaced in accordance with an operation performed thereon. The acceleration instruction unit 108 is an accelerator grip.

The straddled vehicle 100 includes an engine unit EU1. The engine unit EU1 includes an intake passage 115 and a throttle body 116.

FIG. 17 is a diagram outlining the arrangement of the engine unit of the vehicle shown in FIG. 16.

A direction in which the straddled vehicle 100 equipped with the engine unit EU1 travels will be referred to as front direction Fr, and a direction reverse to the front direction Fr will be referred to as back direction Bk. The direction including the front direction Fr and the back direction Bk may be referred to as front-back direction FB.

The engine unit EU1 includes a spark-ignition type two-valve engine 1, an intake passage 115, a throttle body 116, an exhaust passage 117, and a catalyst unit 119.

The intake passage 115 is connected to the spark-ignition type two-valve engine 1.

The throttle body 116 is disposed midway in the intake passage 115. The intake passage 115 in this Description includes a gas passage inside the throttle body 116. The throttle body 116 controls the flow rate of air to be supplied to the spark-ignition type two-valve engine 1. The throttle body 116 controls the amount of air to be supplied to the spark-ignition type two-valve engine 1, based on the amount of operation on the acceleration instruction unit 108.

The exhaust passage 117 allows gas discharged from the spark-ignition type two-valve engine 1 to pass therethrough. The catalyst unit 119 is disposed in the exhaust passage 117. The catalyst unit 119 purifies gas passing through the exhaust passage 117.

The spark-ignition type two-valve engine 1 provided in the straddled vehicle 100 is disposed laterally. To be specific, the spark-ignition type two-valve engine 1 is disposed such that the angle formed between a vertical plane vertical to the front-back direction FB and the reciprocation direction Z of the piston part 5 is smaller than the angle formed between a horizontal plane and the reciprocation direction Z.

The intake passage 115 connects the spark-ignition type two-valve engine 1 to an air filter (not shown). The intake passage 115 communicates with the single center tumble port (SCTP) 41a of the spark-ignition type two-valve engine 1. Specifically, the intake tube 114 included in the intake passage 115 connects the single center tumble port (SCTP) 41a to the throttle body 116. The intake passage 115 supplies gas to the single center tumble port (SCTP) 41a. More specifically, the intake passage 115 takes in air from the air filter (not shown), and supplies the air to the single center tumble port (SCTP) 41a.

The throttle body 116 includes a throttle valve 116a. The throttle valve 116a regulates the flow rate of gas flowing through the intake passage 115. In detail, the throttle valve 116a controls the amount of air flowing through the intake passage 115, based on the amount of operation on the acceleration instruction unit 108.

The throttle body 116 of the engine unit EU1 shown in FIG. 17 is disposed such that an angle θ1 formed between the reciprocation direction Z of the piston part 5 and a center line 115a of the intake passage 115 in the throttle body 116 is smaller than an angle θ2 formed between a plane V perpendicular to the reciprocation direction Z and the center line 115a. The throttle body 116 is positioned so as to overlap the small-diameter long-stroke cylinder 4 in a direction Y perpendicular to the reciprocation direction Z.

The catalyst unit 119 is positioned so as to overlap the small-diameter long-stroke cylinder 4 in the direction Y perpendicular to the reciprocation direction Z. Thus, the catalyst unit 119 is disposed so as to extend along the small-diameter long-stroke cylinder 4. The catalyst unit 119 is disposed below the small-diameter long-stroke cylinder 4 in the vertical direction of the straddled vehicle 100 upright.

The engine unit EU1 needs to be small-sized, because it is mounted to the straddled vehicle 100. For example, the small-diameter long-stroke cylinder 4 of the spark-ignition type two-valve engine 1 provided in the engine unit EU1 is disposed above the down frame 104a in the vertical direction. The intake passage 115 and the throttle body 116 provided in the engine unit EU1 are also disposed above the down frame 104a.

Disposed above the engine unit EU1 is, for example, a battery or a storage part (not shown). The engine unit EU1 is disposed in a limited space between the down frame 104a and the battery or between the down frame 104a and the storage part.

The combustion chamber 4r of the spark-ignition type two-valve engine provided in the engine unit EU1 shown in FIG. 17 has the diameter B shorter than the reciprocation stroke length St (see FIG. 1) of the piston part 5, when viewed in the reciprocation direction Z. Therefore, the size of the small-diameter long-stroke cylinder 4 in its diameter direction, which defines the combustion chamber 4r, is smaller as compared to a configuration having a diameter longer than a stroke, for example. This provides a high degree of freedom in the arrangement of the throttle body 116, which is positioned so as to overlap the small-diameter long-stroke cylinder 4.

Accordingly, an arrangement as shown in FIG. 17 where the throttle body 116 is disposed such that the angle θ1 formed between the reciprocation direction Z and the center line 115a of the intake passage is smaller than the angle θ2 formed between the plane V perpendicular to the reciprocation direction Z of the piston part 5, and the center line allows the intake passage 115 and the single center tumble port (SCTP) 41a to be disposed along a curve with a small curvature. Consequently, production of a fast tumble flow in the combustion chamber 4r is less hindered. Due to the fast tumble flow, the thermal efficiency is further increased.

The catalyst unit 119 is positioned so as to overlap the small-diameter long-stroke cylinder 4 in the direction Y perpendicular to the reciprocation direction Z. The catalyst unit 119, therefore, can be arranged near the spark-ignition type two-valve engine 1. Arranging the catalyst unit 119 near the spark-ignition type two-valve engine 1 allows a catalyst of the catalyst unit 119 to be supplied with exhaust gas having higher temperature. Accordingly, the catalyst can exert its purification performance more effectively after the engine is started, for example. When, however, the catalyst unit 119 is arranged near the spark-ignition type two-valve engine 1, a flow of the exhaust gas discharged from the spark-ignition type two-valve engine 1 receives a large influence from a resistance of the catalyst unit 119.

The catalyst unit 119 shown in FIG. 16 and FIG. 17 is positioned so as to maintain a minimum ground clearance of the engine unit EU1 in the straddled vehicle 100. Thus, there is a limit to how low the catalyst unit 119 can be arranged. Here, the size of the small-diameter long-stroke cylinder 4 in its diameter direction is smaller as compared to when its diameter is longer than the stroke, for example. This means a high degree of freedom in designing the shape of the catalyst unit 119. A resistance of the catalyst unit 119 to the exhaust gas flow can be suppressed by, for example, the catalyst unit 119 having a large diameter. When the resistance to the exhaust gas flow is suppressed in this manner, the thermal efficiency of the spark-ignition type two-valve engine 1 is improved.

Since the size of the small-diameter long-stroke cylinder 4 in its diameter direction is small, the degree of freedom in arranging the spark-ignition type two-valve engine 1 itself is also increased. For example, it is possible to arrange the spark-ignition type two-valve engine 1 at a lower position in the vertical direction while maintaining the position and shape of the catalyst unit 119. As a result, the intake passage 115 and the single center tumble port (SCTP) 41a can be arranged along a curve with a small curvature. Consequently, production of a fast tumble flow in the combustion chamber 4r is less hindered. Due to the fast tumble flow, the thermal efficiency is further increased.

The engine unit EU1 shown in FIG. 17 can improve the thermal efficiency, while still having a mountability to vehicle.

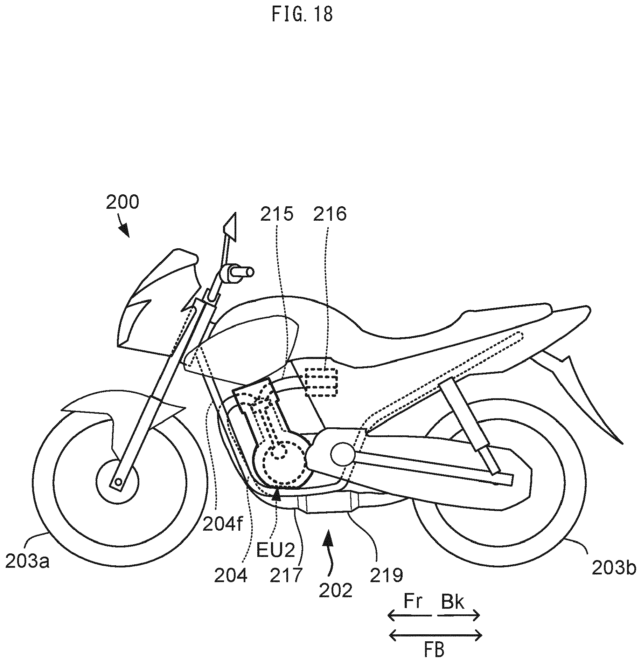

FIG. 18 is a side view of a straddled vehicle of a kind different from the one shown in FIG. 16.

A straddled vehicle 200 shown in FIG. 18 is a so-called street type motorcycle. The straddled vehicle 200 includes a vehicle body 202 and wheels 203a, 203b. The vehicle body 202 has a frame 204. The frame 204 includes a front frame 204f.

The straddled vehicle 200 includes an engine unit EU2. The engine unit EU2 includes a spark-ignition type two-valve engine 1, an intake passage 215, a throttle body 216, an exhaust passage 217, and a catalyst unit 219. The wheel 203b receives a rotational force outputted from the spark-ignition type two-valve engine 1, and drives the straddled vehicle 200.

The throttle body 216 controls the flow rate of air to be supplied to the spark-ignition type two-valve engine 1.

The exhaust passage 217 allows gas discharged from the spark-ignition type two-valve engine 1 to pass therethrough. The catalyst unit 219 is disposed in the exhaust passage 217.

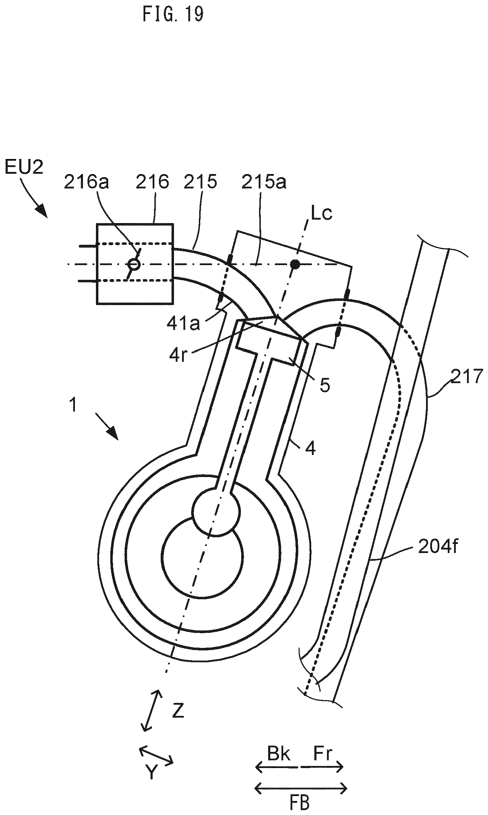

FIG. 19 is a diagram outlining arrangement of an engine unit of the vehicle shown in FIG. 18.

The spark-ignition type two-valve engine 1 provided in the straddled vehicle is disposed longitudinally. To be specific, the spark-ignition type two-valve engine 1 is disposed such that the angle formed between a horizontal plane in the straddled vehicle 200 and the reciprocation direction Z of the piston part 5 is greater than the angle formed between a vertical plane in the straddled vehicle 200 and the reciprocation direction Z of the piston part 5.

The front frame 204f is disposed on the front side Fr of the spark-ignition type two-valve engine 1 in the front-back direction FB of the straddled vehicle 200.

The throttle body 216 of the engine unit EU2 shown in FIG. 19 is disposed such that a piston part center line Lc extending in the reciprocation direction Z of the piston part 5 intersects a center line 215a of the intake passage 215 in the throttle body 216.

The engine unit EU2 shown in FIG. 19 is disposed on the back side Bk of the front frame 204f in the front-back direction FB. The combustion chamber 4r of the spark-ignition type two-valve engine has the diameter B shorter than the reciprocation stroke length St (see FIG. 1) of the piston part 5, when viewed in the reciprocation direction Z. Therefore, the size of the small-diameter long-stroke cylinder 4 in its diameter direction, which defines the combustion chamber 4r, is smaller as compared to a configuration having a diameter longer than a stroke, for example. This provides a high degree of freedom in the arrangement of the throttle body 216, which is positioned such that the center line of the piston part 5 intersects the center line 215a of the intake passage 215. Since the throttle body 216 can be disposed in such a manner that production of a fast tumble flow in the combustion chamber 4r is less hindered, a further increase in the thermal efficiency can be obtained due to the fast tumble flow.

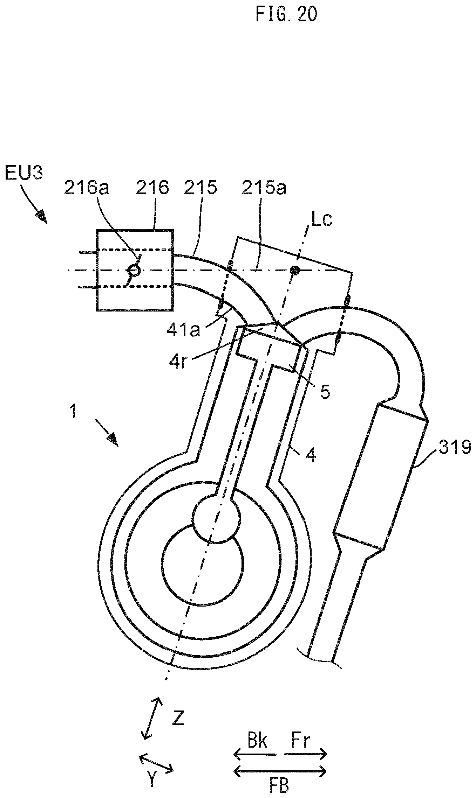

FIG. 20 is a diagram outlining arrangement of an engine unit of a kind different from the one shown in FIG. 19.

In an engine unit EU3 shown in FIG. 20, the position where a catalyst unit 319 is disposed is different from the position where the catalyst unit 219 is disposed in FIG. 18. It is identical to FIG. 19, except that illustration of the front frame 204f is omitted for easy grasp of the position of the catalyst unit 319.

The catalyst unit 319 shown in FIG. 20 is positioned so as to overlap the small-diameter long-stroke cylinder 4 in the direction Y perpendicular to the reciprocation direction Z. Thus, the catalyst unit 319 is disposed so as to extend along the small-diameter long-stroke cylinder 4. The catalyst unit 319 is disposed on the front side Fr of the small-diameter long-stroke cylinder 4 in the front-back direction FB of the straddled vehicle equipped with the engine unit EU3.

The engine unit EU3 shown in FIG. 20, like the engine unit EU2 shown in FIG. 19, is required to be small-sized because it is mounted to the straddled vehicle 200 (see FIG. 18). For example, the engine unit EU3 is disposed at an interval from the front wheel 203a (see FIG. 18).

The combustion chamber 4r of the spark-ignition type two-valve engine 1 provided in the engine unit EU3 has the diameter B shorter than the reciprocation stroke length St (see FIG. 1) of the piston part 5, when viewed in the reciprocation direction Z. Therefore, the size of the small-diameter long-stroke cylinder 4 in its diameter direction, which defines the combustion chamber 4r, is smaller as compared to a configuration having a diameter longer than a stroke, for example. This provides a high degree of freedom in arrangement of the catalyst unit 319, which is positioned so as to overlap the small-diameter long-stroke cylinder 4.

In the engine unit EU3 shown in FIG. 20, arranging the catalyst unit 319 near the spark-ignition type two-valve engine 1 allows a catalyst to exert its purification performance more effectively after the engine is started, for example. In addition, the catalyst unit 319 is disposed so as to extend along the small-diameter long-stroke cylinder 4 of the spark-ignition type two-valve engine 1 having the combustion chamber 4r whose diameter B is shorter than the reciprocation stroke length St (see FIG. 1) of the piston part 5. This makes it possible that the catalyst unit 319 has a large diameter. With this, when exhaust gas discharged from the spark-ignition type two-valve engine 1 flows through the catalyst unit 319, a resistance to the exhaust gas flow can be reduced. Accordingly, a resistance to the exhaust gas flow in an exhaust stroke can be reduced, and therefore the thermal efficiency can be improved.

### Reference Signs List

- 1: spark-ignition type two-valve engine
- 2: crankshaft
- 4: small-diameter long-stroke cylinder
- 4r: combustion chamber
- 5: piston part
- 7: offset ignition plug
- 7a: offset ignition part
- 41a, 241a, 341a: single center tumble port
- 41b: gas inlet
- 41e: exhaust port
- 41f: gas outlet
- 81: intake valve
- 100, 200: straddled vehicle
- 115, 215: intake passage
- 116, 216: throttle body
- 116a: throttle valve
- 117: exhaust passage
- 119, 219, 319: catalyst unit
- 216: throttle body
- EU1, EU2, EU3: engine unit

## Claims

1. A spark-ignition type two-valve engine (1) comprising:
a piston part (5) configured to reciprocate, the piston part (5) defining a combustion chamber (4r);
a crankshaft (2) coupled to the piston part (5) so as to be rotated in accordance with reciprocation of the piston part (5);
one exhaust port (41e) communicating with the combustion chamber (4r) via a gas outlet (41f);
one single center tumble port (41a, 241a) communicating with the combustion chamber (4r) via a gas inlet (41b), the one single center tumble port (41a, 241a) having a separation enhancing part (41p, 241p) configured to cause gas being flown to the gas inlet (41b) to flow separate away from a wall surface leading to the gas inlet (41b), wherein a wall surface constituting the single center tumble port (41a) has an annular portion adjacent to the gas inlet (41b), and the separation enhancing part (41p) having a sharply folded-back shape and disposed at a portion (41g) of the annular portion farthest from at least the gas outlet (41f), in a cross-sectional view taken through the gas inlet (41b) and the gas outlet (41f), such that a tumble flow which is a vortex around an axis that extends in a direction intersecting a reciprocation direction (Z) of the piston part (5) is imparted to gas taken into the combustion chamber (4r) through the gas inlet (41b), the gas inlet (41b) being provided such that an extending area (Ae) covers the gas outlet (41f) when viewed in the reciprocation direction (Z) of the piston part (5), the extending area (Ae) being defined as an area that has a width equal to that of the gas inlet (41b) and that extends from the gas inlet (41b) toward a gas intake direction of the gas inlet (41b) when viewed in the reciprocation direction (Z) of the piston part (5);
one exhaust valve (82) configured to open and close the gas outlet (41f);
one intake valve (81) configured to open and close the gas inlet (41b);
an offset ignition plug (7) including an offset ignition part (7a) configured to apply spark ignition to gas in the combustion chamber (4r), the offset ignition part (7a) being disposed in a first region (A1) out of two regions defined by a center passing line (S) dividing the combustion chamber (4r) into two such that the offset ignition part (7a) is provided without overlapping the center passing line (S), the center passing line (S) passing through the center of the gas outlet (41f) and the center of the gas inlet (41b) when viewed in the reciprocation direction (Z); and
a small-diameter long-stroke cylinder (4) provided with the one exhaust port (41e) and the single center tumble port (41a, 241a), the small-diameter long-stroke cylinder (4) having a stroke volume of 0.1 L or more and less than 0.2 L, the small-diameter long-stroke cylinder (4) cooperating with the piston part (5) to define the combustion chamber (4r), the small-diameter long-stroke cylinder (4) being formed in such a manner that: the combustion chamber (4r) has a diameter shorter than a reciprocation stroke length (St) of the piston part (5) when viewed in the reciprocation direction (Z); and as the piston part (5) moves toward a bottom dead center by a stroke length longer than the diameter of the combustion chamber (4r) when viewed in the reciprocation direction (Z), the tumble flow is imparted to gas taken from the single center tumble port (41a, 241a) through the separation enhancing part (41p, 241p), while as the piston part (5) moves toward a top dead center by a stroke length longer than the diameter, the gas pushed by the piston part (5) flows toward the gas inlet (41b), wherein the piston part (5) has the reciprocation stroke length (St) longer than 1.2 times the diameter of the combustion chamber (4r).

2. The spark-ignition type two-valve engine (1) according to claim 1, wherein
the small-diameter long-stroke cylinder (4) has a stroke volume of 0.1 L or more and less than 0.18 L.

3. An engine unit (EU1) comprising:
the spark-ignition type two-valve engine (1) according to claim 1 or 2;
an intake passage (115) communicating with the single center tumble port (41a), the intake passage (115) being configured to supply gas to the single center tumble port (41a); and
a throttle body (116) including a throttle valve (116a) configured to regulate a flow rate of gas flowing through the intake passage (115),
the throttle body (116) being positioned so as to overlap the small-diameter long-stroke cylinder (4) in a direction perpendicular to the reciprocation direction (Z) of the piston part (5) such that an angle formed between the reciprocation direction (Z) of the piston part (5) and a center line (115a) of the intake passage (115) in the throttle body (116) is smaller than an angle (θ2) formed between a plane (V) perpendicular to the reciprocation direction (Z) of the piston part (5) and the center line (115a).

4. An engine unit (EU2) comprising:
the spark-ignition type two-valve engine (1) according to claim 1 or 2;
an intake passage (215) communicating with the single center tumble port (241a), the intake passage (215) being configured to supply gas to the single center tumble port (241a); and
a throttle body (216) including a throttle valve (216a) configured to regulate a flow rate of gas flowing through the intake passage (215),
the throttle body (216) being arranged such that a center line of the piston part (5) extending in a reciprocation direction (Z) of the piston part (5) intersects a center line (215a) of the intake passage (215) in the throttle body (216).

5. An engine unit (EU3) comprising:
the spark-ignition type two-valve engine (1) according to claim 1 or 2; and
a catalyst unit (319) arranged so as to at least partially overlap the small-diameter long-stroke cylinder (4) when viewed in a diameter direction of the small-diameter long-stroke cylinder (4), the catalyst unit (319) accommodating a catalyst configured to purify exhaust gas discharged from the combustion chamber (4r) of the spark-ignition type two-valve engine (1).

6. A vehicle (100, 200) comprising:
the spark-ignition type two-valve engine (1) according to claim 1 or 2; and
a vehicle wheel (103b, 203b) configured to be driven by the spark-ignition type two-valve engine (1).

## Patentansprüche

1. Ein Funkenentzündungstyp-Zweiventil-Motor (1), der folgende Merkmale aufweist:
ein Kolbenteil (5), das dazu ausgebildet ist, sich hin- und herzubewegen, wobei das Kolbenteil (5) eine Verbrennungskammer (4r) definiert;
eine Kurbelwelle (2), die mit dem Kolbenteil (5) so gekoppelt ist, dass sie sich gemäß der Hin-und Herbewegung des Kolbenteils (5) dreht;
eine Entströmungsöffnung (41e), die über einen Gasauslass (41f) mit der Verbrennungskammer (4r) in Kommunikation steht;
eine Einzelne-Mitte-Wirbelöffnung (41a, 241a), die über einen Gaseinlass (41b) mit der Verbrennungskammer (4r) in Kommunikation steht, wobei die eine Einzelne-Mitte-Wirbelöffnung (41a, 241a) ein Trennungsverstärkungsteil (41p, 241p) aufweist, das dazu ausgebildet ist zu bewirken, dass Gas, das zu dem Gaseinlass (41b) strömt, separat weg von einer Wandoberfläche strömt, die zu dem Gaseinlass (41b) führt, wobei eine Wandoberfläche, die die Einzelne-Mitte-Wirbelöffnung (41a) ausbildet, einen ringförmigen Abschnitt benachbart zu dem Gaseinlass (41b) aufweist, und das Trennungsverstärkungsteil (41p) eine scharf zurückgefaltete Form aufweist und an einem Abschnitt (41g) des ringförmigen Abschnitts angeordnet ist, der am weitesten weg von zumindest dem Gasauslass (41f) liegt, in einer Querschnittsansicht durch den Gaseinlass (41b) und den Gasauslass (41f), derart, dass ein Wirbelstrom, der ein Strudel um eine Achse ist, die sich in einer Richtung erstreckt, die eine Hin- und Her-Richtung (Z) des Kolbenteils (5) schneidet, auf Gas angewendet wird, das durch den Gaseinlass (41b) in die Verbrennungskammer (4r) gelangt, wobei der Gaseinlass (41b) derart vorgesehen ist, dass eine Ausdehnungsfläche (Ae) den Gasauslass (41f) bei Betrachtung in der Hin- und Her-Richtung (Z) des Kolbenteils (5) bedeckt, wobei die Ausdehnungsfläche (Ae) als eine Fläche definiert ist, die eine Breite aufweist, die gleich derjenigen des Gaseinlasses (41b) ist und die sich bei Betrachtung in der Hin und Her-Richtung (Z) des Kolbenteils (5) von dem Gaseinlass (41b) in Richtung einer Gaseinlassrichtung des Gaseinlasses (41b) erstreckt;
ein Entströmungsventil (82), das dazu ausgebildet ist, den Gasauslass (41f) zu öffnen und zu schließen;
ein Eingangsventil (81), das dazu ausgebildet ist, den Gaseinlass (41b) zu öffnen und zu schließen;
eine Versatzzündkerze (7), die ein Versatzzündteil (7a) aufweist, dazu ausgebildet, eine Funkenentzündung auf Gas in der Verbrennungskammer (4r) anzuwenden, wobei das Versatzzündteil (7a) in einer ersten Region (A1) von zwei Regionen angeordnet ist, die durch eine Mittelverlaufslinie (S) definiert ist, die die Verbrennungskammer (4r) derart zweiteilt, dass das Versatzzündteil (7a) vorgesehen ist, ohne die Mittelverlaufslinie (S) zu überlappen, wobei die Mittelverlaufslinie (S) bei Betrachtung in der Hin-und-Her-Richtung (Z) durch die Mitte des Gasauslasses (41f) und die Mitte des Gaseinlasses (41b) verläuft; und
einen Zylinder (4) mit kleinem Durchmesser und langem Hub, der mit der einen Entströmungsöffnung (41e) und der Einzelne-Mitte-Wirbelöffnung (41a, 241a) versehen ist, wobei der Zylinder (4) mit kleinem Durchmesser und langem Hub ein Hubvolumen von 0,1 L oder mehr und weniger als 0,2 L aufweist, wobei der Zylinder (4) mit kleinem Durchmesser und langem Hub mit dem Kolbenteil (5) zusammenwirkt, um die Verbrennungskammer (4r) zu definieren, wobei der Zylinder (4) mit kleinem Durchmesser und langem Hub auf derartige Weise gebildet ist, dass: die Verbrennungskammer (4r) einen Durchmesser aufweist, der bei Betrachtung in der Hin-und-Her-Richtung (Z) kürzer ist als eine Hin- und Herbewegungs-Hublänge (St) des Kolbenteils (5); und wenn sich das Kolbenteil (5) um eine Hublänge, die bei Betrachtung in der Hin-und-Her-Richtung (Z) länger ist als der Durchmesser der Verbrennungskammer (4r), hin zu einem unteren Totpunkt bewegt, der Wirbelstrom auf Gas angewendet wird, das durch das Trennungsverstärkungsteil (41p, 241p) aus der Einzelne-Mitte-Wirbelöffnung (41a, 241a) genommen wird, während, wenn sich das Kolbenteil (5) um eine Hublänge, die länger ist als der Durchmesser, hin zu einem oberen Totpunkt bewegt, das Gas, das durch das Kolbenteil (5) gedrückt wird, zu dem Gaseinlass (41b) hin strömt, wobei das Kolbenteil (5) die Hin- und Herbewegungs-Hublänge (St) aufweist, die länger ist als 1,2 mal der Durchmesser der Verbrennungskammer (4r).

2. Der Funkenentzündungstyp-Zweiventil-Motor (1) gemäß Anspruch 1, bei dem
der Zylinder (4) mit kleinem Durchmesser und langem Hub ein Hubvolumen von 0,1 L oder mehr und weniger als 0,18 L aufweist.

3. Eine Motoreinheit (EU1), die folgende Merkmale aufweist:
den Funkenentzündungstyp-Zweiventil-Motor (1) gemäß Anspruch 1 oder 2;
einen Eingangsdurchgang (115), der mit der Einzelne-Mitte-Wirbelöffnung (41a) in Kommunikation steht, wobei der Eingangsdurchgang (115) dazu ausgebildet ist, Gas an die Einzelne-Mitte-Wirbelöffnung (41a) zu liefern; und
einen Drosselkörper (116) mit einem Drosselventil (116a), der dazu ausgebildet ist, eine Strömungsrate von Gas zu regeln, das durch den Eingangsdurchgang (115) strömt,
wobei der Drosselkörper (116) so positioniert ist, dass er den Zylinder (4) mit kleinem Durchmesser und langem Hub in einer Richtung senkrecht zu der Hin-und-Her-Richtung (Z) des Kolbenteils (5) derart überlappt, dass ein Winkel, der zwischen der Hin-und-Her-Richtung (Z) des Kolbenteils (5) und einer Mittellinie (115a) des Eingangsdurchgangs (115) in dem Drosselkörper (116) gebildet ist, kleiner ist als ein Winkel (θ2),der zwischen einer Ebene (V), die senkrecht zu der Hin-und-Her-Richtung (Z) des Kolbenteils (5) ist, und der Mittellinie (115a) gebildet ist.

4. Eine Motoreinheit (EU2), die folgende Merkmale aufweist:
den Funkenentzündungstyp-Zweiventil-Motor (1) gemäß Anspruch 1 oder 2;
einen Eingangsdurchgang (215), der mit der Einzelne-Mitte-Wirbelöffnung (241a) in Kommunikation steht, wobei der Eingangsdurchgang (215) dazu ausgebildet ist, Gas an die Einzelne-Mitte-Wirbelöffnung (241a) zu liefern; und
einen Drosselkörper (216) mit einem Drosselventil (216a), der dazu ausgebildet ist, eine Strömungsrate von Gas zu regeln, das durch den Eingangsdurchgang (215) strömt,
wobei der Drosselkörper (216) derart angeordnet ist, dass eine Mittellinie des Kolbenteils (5), die sich in einer Hin-und-Her-Richtung (Z) des Kolbenteils (5) erstreckt, eine Mittellinie (215a) des Eingangsdurchgangs (215) in dem Drosselkörper (216) schneidet,

5. Eine Motoreinheit (EU3), die folgende Merkmale aufweist:
den Funkenentzündungstyp-Zweiventil-Motor (1) gemäß Anspruch 1 oder 2; und
eine Katalysatoreinheit (319), die so angeordnet ist, dass sie den Zylinder (4) mit kleinem Durchmesser und langem Hub bei Betrachtung in einer Durchmesserrichtung des Zylinders (4) mit kleinem Durchmesser und langem Hub zumindest teilweise überlappt, wobei die Katalysatoreinheit (319) einen Katalysator unterbringt, der dazu ausgebildet ist, Abgas zu reinigen, das aus der Verbrennungskammer (4r) des Funkenentzündungstyp-Zweiventil-Motors (1) abgegeben wird.

6. Ein Fahrzeug (100, 200), das folgende Merkmale aufweist:
den Funkenentzündungstyp-Zweiventil-Motor (1) gemäß Anspruch 1 oder 2; und
ein Fahrzeugrad (103b, 203b), das dazu ausgebildet ist, durch den Funkenentzündungstyp-Zweiventil-Motor (1) angetrieben zu werden.

## Revendications

1. Moteur à deux soupapes de type à allumage par étincelle (1) comprenant:
une partie de piston (5) configurée pour se déplacer en va-et-vient, la partie de piston (5) définissant une chambre de combustion (4r);
un vilebrequin (2) couplé à la partie de piston (5) de manière à être mis en rotation selon un mouvement de va-et-vient de la partie de piston (5);
un orifice d'échappement (41e) communiquant avec la chambre de combustion (4r) par l'intermédiaire d'une sortie de gaz (41f);
un orifice de culbutage central unique (41a, 241a) communiquant avec la chambre de combustion (4r) par l'intermédiaire d'une entrée de gaz (41b), l'orifice de culbutage central unique (41a, 241a) présentant une partie d'amélioration de séparation (41p, 241p) configurée pour amener le gaz circulant vers l'entrée de gaz (41b) à circuler éloigné d'une surface de paroi conduisant vers l'entrée de gaz (41b), où une surface de paroi constituant l'orifice de culbutage central unique (41a) présente une partie annulaire adjacente à l'entrée de gaz (41b), et la partie d'amélioration de séparation (41p) présentant une forme fortement repliée et disposée au niveau d'une partie (41g) de la partie annulaire la plus éloignée d'au moins la sortie de gaz (41f), dans une vue en coupe prise à travers l'entrée de gaz (41b) et la sortie de gaz (41f), de sorte qu'une circulation en culbute, qui est un vortex autour d'un axe qui s'étend dans une direction venant en intersection avec une direction de va-et-vient (Z) de la partie de piston (5) soit conférée au gaz admis dans la chambre de combustion (4r) à travers l'entrée de gaz (41b), l'entrée de gaz (41b) étant prévue de sorte qu'une zone d'extension (Ae) recouvre la sortie de gaz (41f), lorsque vue dans la direction de va-et-vient (Z) de la partie de piston (5), la zone d'extension (Ae) étant définie comme une zone qui présente une largeur égale à celle de l'entrée de gaz (41b) et qui s'étend de l'entrée de gaz (41b) vers une direction d'admission de gaz de l'entrée de gaz (41b), lorsque vue dans la direction de va-et-vient (Z) de la partie de piston (5);
une soupape d'échappement (82) configurée pour ouvrir et fermer la sortie de gaz (41f);
une soupape d'admission (81) configurée pour ouvrir et fermer l'entrée de gaz (41b);
une bougie d'allumage décalée (7) comportant une partie d'allumage décalée (7a) configurée pour appliquer un allumage par étincelle au gaz dans la chambre de combustion (4r), la partie d'allumage décalée (7a) étant disposée dans une première région (A1) parmi deux régions définies par une ligne passant par le centre (S) divisant la chambre de combustion (4r) en deux de sorte que la partie d'allumage décalée (7a) soit prévue sans venir en chevauchement avec la ligne passant par le centre (S), la ligne passant par le centre (S) passant par le centre de la sortie de gaz (41f) et le centre de l'entrée de gaz (41b), lorsque vue dans la direction de va-et-vient (Z); et
un cylindre à course longue de petit diamètre (4) pourvu de l'un orifice d'échappement (41e) et de l'orifice de culbutage central unique (41a, 241a), le cylindre à course longue de petit diamètre (4) présentant un volume de course de 0,1 L ou supérieur, et inférieur à 0,2 L, le cylindre à course longue de petit diamètre (4) coopérant avec la partie de piston (5) pour définir la chambre de combustion (4r), le cylindre à course longue de petit diamètre (4) étant formé de sorte que: la chambre de combustion (4r) présente un diamètre plus court qu'une longueur de course de va-et-vient (St) de la partie de piston (5), lorsque vue dans la direction de va-et-vient (Z); et, au fur et à mesure que la partie de piston (5) se déplace vers un point mort bas d'une longueur de course plus longue que le diamètre de la chambre de combustion (4r), lorsque vue dans la direction de va-et-vient (Z), la circulation en chute est conférée au gaz admis de l'orifice de culbutage central unique (41a, 241a) à travers la partie d'amélioration de séparation (41p, 241p), tandis que, au fur et à mesure que la partie de piston (5) se déplace vers un point mort haut d'une longueur de course supérieure au diamètre, le gaz poussé par la partie de piston (5) circule vers l'entrée de gaz (41b), la partie de piston (5) présentant une longueur de course de va-et-vient (St) supérieure à 1,2 fois le diamètre de la chambre de combustion (4r).

2. Moteur à deux soupapes de type à allumage par étincelle (1) selon la revendication 1, dans lequel
le cylindre à course longue de petit diamètre (4) présente un volume de course de 0,1 L ou plus et de moins de 0,18 L.

3. Unité de moteur (EU1) comprenant:
le moteur à deux soupapes de type à allumage par étincelle (1) selon la revendication 1 ou 2;
un passage d'admission (115) communiquant avec l'orifice de culbutage central unique (41a), le passage d'admission (115) étant configuré pour alimenter du gaz vers l'orifice de culbutage central unique (41a); et
un corps d'étranglement (116) comportant une soupape d'étranglement (116a) configurée pour réguler un débit de gaz circulant à travers le passage d'admission (115),
le corps d'étranglement (116) étant positionné de manière à venir en chevauchement avec le cylindre à course longue de petit diamètre (4) dans une direction perpendiculaire à la direction de va-et-vient (Z) de la partie de piston (5), de sorte qu'un angle formé entre la direction de va-et-vient (Z) de la partie de piston (5) et une ligne de centre (115a) du passage d'admission (115) dans le corps d'étranglement (116) soit inférieur à un angle (θ2) formé entre un plan (V) perpendiculaire à la direction de va-et-vient (Z) de la partie de piston (5) et la ligne de centre (115a).

4. Unité de moteur (EU2) comprenant:
le moteur à deux soupapes de type à allumage par étincelle (1) selon la revendication 1 ou 2;
un passage d'admission (215) communiquant avec l'orifice de culbutage central unique (241a), le passage d'admission (215) étant configuré pour alimenter du gaz vers l'orifice de culbutage central unique (241a); et
un corps d'étranglement (216) comportant une soupape d'étranglement (216a) configurée pour réguler un débit de gaz circulant à travers le passage d'admission (215),
le corps d'étranglement (216) étant disposé de sorte qu'une ligne de centre de la partie de piston (5) s'étendant dans une direction de va-et-vient (Z) de la partie de piston (5) vienne en intersection avec une ligne de centre (215a) du passage d'admission (215) dans le corps d'étranglement (216).

5. Unité de moteur (EU3) comprenant:
le moteur à deux soupapes de type à allumage par étincelle (1) selon la revendication 1 ou 2; et
une unité catalytique (319) disposée de manière à venir au moins partiellement en chevauchement avec le cylindre à course longue de petit diamètre (4), lorsque vue dans une direction de diamètre du cylindre à course longue de petit diamètre (4), l'unité catalytique (319) abritant un catalyseur configuré pour purifier les gaz d'échappement évacués de la chambre de combustion (4r) du moteur à deux soupapes de type à allumage par étincelle (1).

6. Véhicule (100, 200) comprenant:
le moteur à deux soupapes de type à allumage par étincelle (1) selon la revendication 1 ou 2; et
une roue de véhicule (103b, 203b) configurée pour être entraînée par le moteur à deux soupapes de type à allumage par étincelle (1).
